# EUROPEAN PATENT APPLICATION

(11) **EP 4 797 668 A1**
(43) Date of publication of application: **26.08.2026**
(21) Application number: 24898206.8
(22) Date of filing: 29.11.2024
(51) Int. Cl.: H04M 1/72409, G06F 3/048, H04M 1/02, H02J 50/10, H04M 1/72448

(54) **ELECTRONIC DEVICE AND METHOD FOR PROVIDING USER INTERFACE**

(30) Priority: 30.11.2023 KR 20230171179; 16.01.2024 KR 20240006713
(71) Applicant: Samsung Electronics Co., Ltd., Suwon-si, Gyeonggi-do 16677 (KR)
(72) Inventor: LEE, Chaeyeon, Suwon-si, Gyeonggi-do 16677 (KR); YOO, Nagyeom, Suwon-si, Gyeonggi-do 16677 (KR); SIM, Hyungbo, Suwon-si, Gyeonggi-do 16677 (KR); CHUNG, Miyeoung, Suwon-si, Gyeonggi-do 16677 (KR); HAM, Yookyung, Suwon-si, Gyeonggi-do 16677 (KR)
(74) Representative: HGF
(86) International application number: PCT/KR2024/019296
(87) International publication number: WO 2025/116612

(57) **Abstract**

The electronic device of the present disclosure comprises: a foldable housing which can be folded or unfolded; a main display disposed on the first surface of the foldable housing; a cover display disposed on the second surface of the foldable housing; a coil disposed toward the second surface and configured to wirelessly receive power from the outside or transmit power to the outside; a communication circuit; at least one processor; and a memory for storing instructions. The instructions, when executed individually or collectively by the at least one processor, cause the electronic device to: determine whether a wearable device is placed in a charging area corresponding to the coil or not; identify at least one of the user of the wearable device or the device name thereof through the communication circuit; control the cover display so as to display a user interface related to the wearable device on the cover display if it is determined that the wearable device is placed in the charging area, and if it is determined that the cover display faces a specific direction; transmit power to the wearable device on the basis of charging settings; and display a user interface regarding the charging of the wearable device.

## Description

### [Technical Field]

Various embodiments of the disclosure relate to an electronic device and method for providing a user interface.

### [Background Art]

Electronic devices including sensors capable of measuring biometric information and/or fitness data by being worn on a user's body are being developed.

These electronic devices may generally be carried in a pocket or the hand for use while moving, but they may also take the form of being worn on parts of the body or various structures. Electronic devices may be defined as wearable devices in that they may be worn on a user's body.

Wearable devices may include, for example, a watch or a band capable of being worn on the user's wrist, or a ring capable of being worn on a user's finger.

The above information may be provided as related art for the purpose of facilitating an understanding of the disclosure. No assertion or determination is made as to whether any of the foregoing may be considered prior art with respect to the present disclosure.

### [Disclosure of Invention]

### [Technical Problem]

An electronic device according to an embodiment of the disclosure may include a foldable housing configured to be folded or unfolded.

An electronic device according to an embodiment of the disclosure may include a main display disposed on a first surface of the foldable housing.

An electronic device according to an embodiment of the disclosure may include a cover display disposed on a second surface of the foldable housing.

An electronic device according to an embodiment of the disclosure may include a coil disposed to face the second surface and configured to receive power wirelessly from the outside or transmit power to the outside.

An electronic device according to an embodiment of the disclosure may include a communication circuit.

An electronic device according to an embodiment of the disclosure may include at least one processor.

An electronic device according to an embodiment of the disclosure may include a memory configured to store instructions.

The instructions according to an embodiment of the disclosure, when executed individually or collectively by the at least one processor, may cause the electronic device to determine whether a wearable device is placed in a charging area corresponding to the coil.

The instructions according to an embodiment of the disclosure, when executed individually or collectively by the at least one processor, may cause the electronic device to identify one or more of a user of the wearable device or a device name thereof through the communication circuit.

The instructions according to an embodiment of the disclosure, when executed individually or collectively by the at least one processor, may cause the electronic device to determine whether the wearable device is placed in the charging area.

The instructions according to an embodiment of the disclosure, when executed individually or collectively by the at least one processor, may cause the electronic device to perform control to display, when it is determined the cover display faces a specific direction, using the cover display, a user interface related to the wearable device on the cover display.

The instructions according to an embodiment of the disclosure, when executed individually or collectively by the at least one processor, may cause the electronic device to transmit power to the wearable device based on charging configuration and display a user interface regarding charging of the wearable device.

A user interface providing method according to an embodiment of the disclosure may include determining whether a wearable device is placed in a charging area corresponding to a coil.

A user interface providing method according to an embodiment of the disclosure may include identifying one or more of a user of the wearable device or a device name thereof through a communication circuit.

A user interface providing method according to an embodiment of the disclosure may include performing control to display, based on determining that the wearable device is placed in the charging area and determining that the cover display faces a specific direction, using the cover display, a user interface related to the wearable device on the cover display.

A user interface providing method according to an embodiment of the disclosure may include transmitting power to the wearable device based on charging configuration and displaying a user interface regarding charging of the wearable device.

### [Brief Description of Drawings]

With regard to the description of the drawings, the same or like reference signs may be used to designate the same or like elements.
FIG. 1 is a block diagram of an electronic device in a network environment according to various embodiments of the disclosure.
FIG. 2A is a view illustrating a folded state of an electronic device according to an embodiment of the disclosure.
FIG. 2B is a view illustrating an extended state of an electronic device when viewed from the direction of a cover display according to an embodiment of the disclosure.
FIG. 2C is a view illustrating an extended state of an electronic device when viewed from the direction of a main display according to an embodiment of the disclosure.
FIG. 3A is a view illustrating a folded state of an electronic device according to an embodiment of the disclosure.
FIG. 3B is a view illustrating an extended state of an electronic device when viewed from the direction of a cover display according to an embodiment of the disclosure.
FIG. 3C is a view illustrating an extended state of an electronic device when viewed from the direction of a main display according to an embodiment of the disclosure.
FIG. 4 is a view illustrating electronic devices and a wearable device according to an embodiment of the disclosure.
FIG. 5 is a flowchart illustrating a method for providing a user interface of an electronic device according to an embodiment of the disclosure.
FIG. 6A is a view illustrating the operation of displaying a user interface related to a wearable device when user input is received on a cover display according to an embodiment of the disclosure.
FIG. 6B is a view illustrating the operation of displaying a user interface related to a wearable device when user input is received on a main display according to an embodiment of the disclosure.
FIG. 7A is a view illustrating the operation of displaying a user interface related to a wearable device in an electronic device according to an embodiment of the disclosure.
FIG. 7B is a view illustrating the operation of displaying a user interface related to a wearable device in an electronic device according to an embodiment of the disclosure.
FIG. 7C is a view illustrating the operation of displaying a user interface related to a wearable device in an electronic device according to an embodiment of the disclosure.
FIG. 7D is a view illustrating the operation of displaying a user interface related to a wearable device in an electronic device according to an embodiment of the disclosure.
FIG. 8 is a view illustrating the operation of displaying a user interface related to a wearable device in an electronic device according to an embodiment of the disclosure.
FIG. 9 is a view illustrating the operation of displaying a user interface related to a wearable device in an electronic device according to an embodiment of the disclosure.
FIG. 10A is a view illustrating a cover of the electronic device in FIG. 2B according to an embodiment of the disclosure.
FIG. 10B is a view illustrating a cover of the electronic device in FIG. 3B according to an embodiment of the disclosure.
FIG. 10C is a view illustrating the user interface displayed on a cover display when the wearable device is placed in a protruding area of the cover in FIG. 10A according to an embodiment of the disclosure.
FIG. 11 is a view illustrating the operation of displaying an indicator related to screen rotation or screen switching on a cover display of an electronic device according to an embodiment of the disclosure.
FIG. 12A is a view illustrating the first connection between a wearable device and an electronic device according to an embodiment of the disclosure.
FIG. 12B is a view illustrating the first connection between a wearable device and an electronic device according to an embodiment of the disclosure.
FIG. 12C is a view illustrating the first connection between a wearable device and an electronic device according to an embodiment of the disclosure.
FIG. 12D is a view illustrating the first connection between a wearable device and an electronic device according to an embodiment of the disclosure.
FIG. 12E is a view illustrating the first connection between a wearable device and an electronic device according to an embodiment of the disclosure.
FIG. 13A is a view illustrating the operation in which an electronic device according to an embodiment of the disclosure displays a user interface regarding a wearable device on a cover display.
FIG. 13B is a view illustrating the operation in which an electronic device according to an embodiment of the disclosure displays a user interface regarding a wearable device on a cover display.
FIG. 14 is a view illustrating the operation in which the electronic device in FIG. 2B according to an embodiment of the disclosure displays a user interface regarding a wearable device on a cover display.
FIG. 15A is a view illustrating the operation in which the electronic device in FIG. 3B according to an embodiment of the disclosure displays a user interface regarding a wearable device on a cover display.
FIG. 15B is a view illustrating the operation in which the electronic device in FIG. 3B according to an embodiment of the disclosure displays a user interface regarding a wearable device on a cover display.
FIG. 16 is a view illustrating the operation in which the electronic device in FIG. 2B according to an embodiment of the disclosure displays a user interface regarding a wearable device on a cover display.
FIGS. 17A and 17B are flowcharts illustrating the connection between an electronic device and a wearable device according to an embodiment of the disclosure.
FIG. 18 is a view illustrating the operation of performing charging configuration for a smart ring in an electronic device according to an embodiment of the disclosure.
FIG. 19A is a view illustrating the case where a smart ring leaves while receiving power in an electronic device according to an embodiment of the disclosure.
FIG. 19B is a view illustrating the case where a smart ring leaves while receiving power in an electronic device according to an embodiment of the disclosure.

### [Mode for the Invention]

Wearable devices (e.g., rings or bands) that do not include a display have difficulty in identifying their charging status and connection status with electronic devices.

An electronic device and method for providing a user interface according to an embodiment of the disclosure aim to provide a user interface related to the interaction between the wearable device and the electronic device.

An electronic device and method for providing a user interface according to an embodiment of the disclosure may provide a user interface related to the interaction with the electronic device to wearable devices that do not include a separate display, thereby improving the usability of wearable devices.

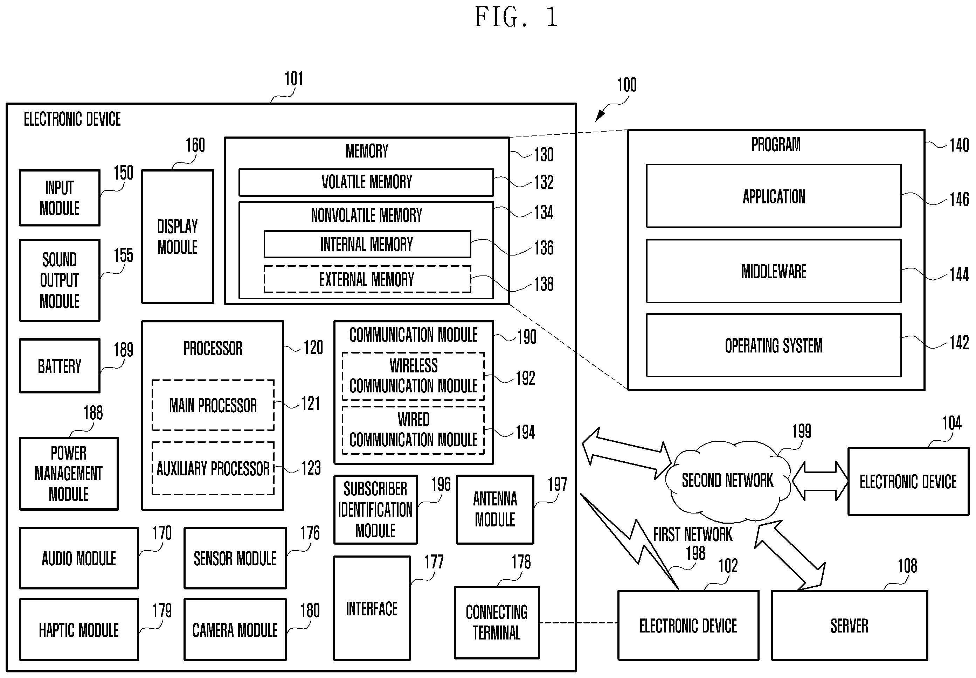

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

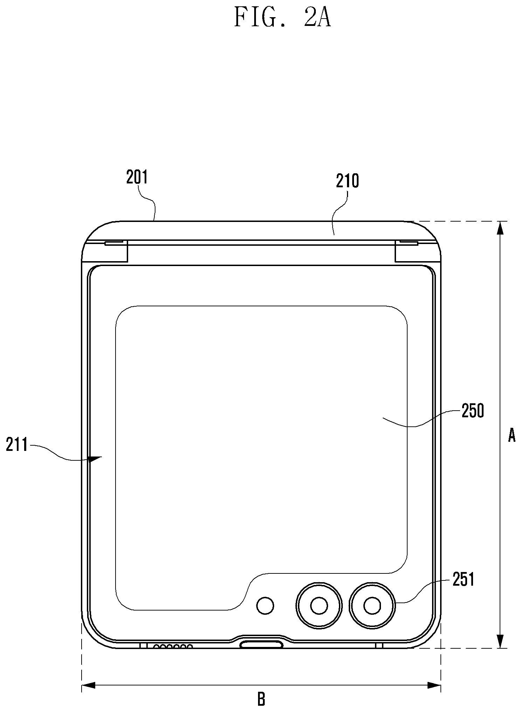

FIG. 2A is a view illustrating a folded state of an electronic device 201 according to an embodiment of the disclosure.

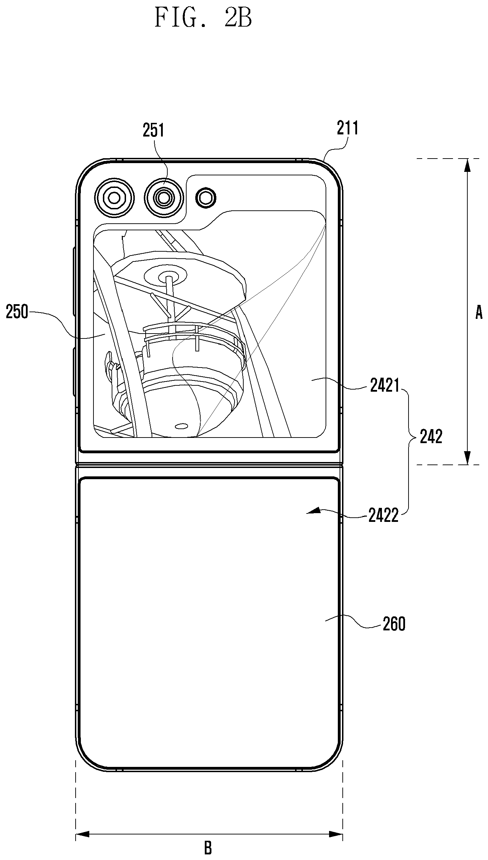

FIG. 2B is a view illustrating an extended state of an electronic device 201 when viewed from the direction of a cover display according to an embodiment of the disclosure.

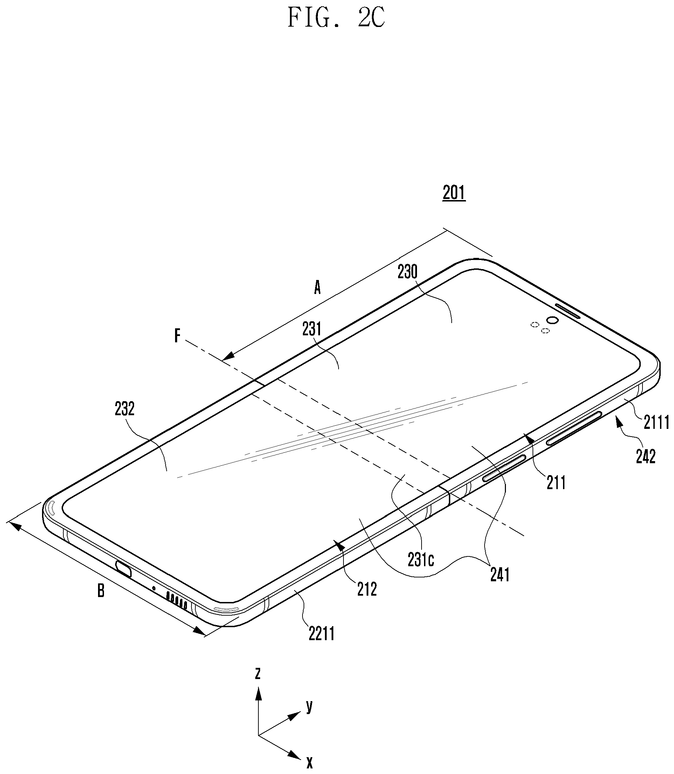

FIG. 2C is a view illustrating an extended state of an electronic device 201 when viewed from the direction of a main display according to an embodiment of the disclosure.

The electronic device 201 in FIG. 2A, FIG. 2B, and FIG. 2C may be identical to the electronic device 101 in FIG. 1. However, the disclosure is not limited thereto, and some components of the electronic device 201 in FIG. 2A, FIG. 2B, and FIG. 2C may be omitted or added compared to the electronic device 101 in FIG. 1.

Referring to FIGS. 2A, 2B, and 2C, the electronic device 201 may include a hinge 210, a first housing 211, and a second housing 212. A foldable housing of the electronic device 201 may include a hinge 210, a first housing 211, and a second housing 212.

In an embodiment, the hinge 210 may include one or more hinge assemblies. The hinge 210 may include a free stop hinge. The free stop hinge may fix the foldable housing (e.g., the first housing 211 and the second housing 212) at a position desired by the user.

In an embodiment, the electronic device 201 may further include one or more sensors capable of detecting the tilt of the hinge 210.

In an embodiment, the hinge 210 may be positioned in an area where the main display 230 may be bent, and may support the main display 230 so that it maintains a certain angle while bent.

In an embodiment, the hinge 210 may be configured such that the first housing 211 and the second housing 212 are folded relative to each other. The pair of housing structures 211 and 212 and the hinge 210 of the electronic device 201 are not limited to the forms and couplings shown in FIG. 2A, FIG. 2A, and FIG. 2C, and may be implemented as combinations and/or couplings of other shapes or components.

In an embodiment, the main display 230 may include a flexible display that may be bent according to the bending angle of the foldable housing. However, the disclosure is not limited thereto, and the main display 230 may include a rigid display.

In an embodiment, the foldable housing may include lateral members or frames 2111 and 2211 that surround the space between the first surface 241 and the second surface 242. For example, the foldable housing may include a first frame 2111 that surrounds the space between the first surface 241 and the second surface 242 of the first housing 211. The foldable housing may include a second frame 2211 that surrounds the space between the first surface 241 and the second surface 242 of the second housing 212. The second surface 242 may include a third surface 2421 and a fourth surface 2422. The first housing 211 may include a third surface 2421. The second housing 212 may include a fourth surface 2422. The front surface of the foldable housing may include a first surface 241. The rear surface of the foldable housing may include a second surface 242.

In an embodiment, the foldable housing may include a main display 230 on the first surface 241.

In an embodiment, the first housing 211 may include a cover display 250 on the third surface 2421.

In an embodiment, the second housing 211 may include a cover 260 on the fourth surface 2422. The second housing 211 may further include a charging circuit inside capable of receiving wireless power from the outside or transmitting wireless power to the outside. The charging circuit may include a coil. The charging circuit may transmit and receive power using at least one of magnetic induction, magnetic resonance, or electromagnetic wave methods.

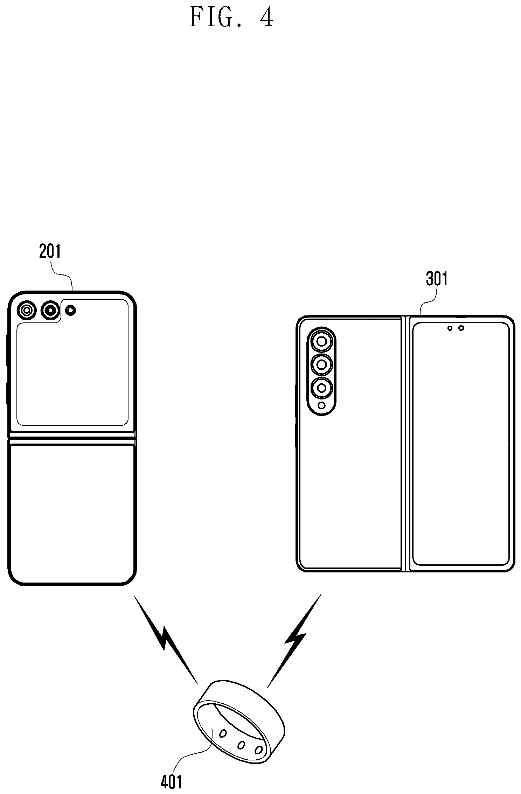

In an embodiment, a wearable device (the wearable device 401 in FIG. 4) may be placed on a cover 260. When the electronic device 201 detects the wearable device (the wearable device 401 in FIG. 4) on the cover 260, the electronic device 201 may transmit power to the wearable device (the wearable device 401 in FIG. 4) through the charging circuit.

In an embodiment, the cover 260 may further include a protruding area in a ring shape so that the wearable device (the wearable device 401 in FIG. 4) may be seated thereon. The electronic device 201 may include a charging circuit in a ring shape, which corresponds to the protruding area, inside the second housing 211. However, it is not limited thereto, and in an embodiment, the cover 260 may have a flat shape. The cover 260 may be coupled to the second housing 211. However, it is not limited thereto, and the cover 260 may be detachable from the second housing 211.

In an embodiment, to align the position between the wearable device (the wearable device 401 in FIG. 4) and the charging circuit, the electronic device 201 may further include a magnet around the charging circuit.

In an embodiment, the wearable device (the wearable device 401 in FIG. 4) may include a magnetic material that reacts to the magnet of the electronic device 201.

In an embodiment, the first frame 2111 may surround the lateral side of the first housing 211, and the second frame 2211 may surround the lateral side of the second housing 212. The first frame 2111 may be formed as at least a part of the first housing 211, and the second frame 2211 may be formed as at least a part of the second housing 212.

In an embodiment, at least a portion of at least one frame 2111 or 2211 may function as an antenna of the electronic device 201. At least a portion of at least one frame 2111 or 2211 may be made of a conductive material (e.g., metal). At least one frame 2111 or 2211 may operate as an antenna under the control of a processor (e.g., the processor 120 in FIG. 1).

In an embodiment, the first housing 211 and the second housing 212 may be positioned on both sides of a folding axis (axis F1) and may be folded or unfolded around the folding axis (axis F1).

In an embodiment, the first housing 211 may support a first area 231 of the main display 230. The second housing 212 may support a second area 232 of the main display 230. The first housing 211 may support the first area 231 of the main display 230 on the first surface 241, and the first housing 211 may include a cover display 250 on the second surface 242 or the third surface 2421.

In an embodiment, the electronic device 201 may determine, under the control of the processor (e.g., the processor 120 in FIG. 1), whether it is in a folded state, a flex state, and/or an extended state, depending on the angle or distance between the first housing 211 and the second housing 212.

In an embodiment, the angle or distance between the first housing 211 and the second housing 212 may be detected based on one or more sensors included in the electronic device 201. The sensor detecting the angle or distance between the first housing 211 and the second housing 212 may be a tilt sensor, for example, an inertial sensor and/or an acceleration sensor.

In an embodiment, when the angle between the first housing 211 and the second housing 212 is a first angle (e.g., 0 degrees), the electronic device 201 may determine that it is a folded state under the control of the processor 120.

In an embodiment, when the angle between the first housing 211 and the second housing 212 is a second angle (e.g., 180 degrees), the electronic device 201 may determine that it is in an extended state under the control of the processor 120.

In an embodiment, when the angle between the first housing 211 and the second housing 212 is within a specific angle range (e.g., a specific angle greater than 0 degrees and less than 180 degrees), the electronic device 201 may determine that it is in a flex state under the control of the processor 120. The flex state may indicate the state in which the electronic device 201 is partially folded.

Referring to FIG. 2A, when the electronic device 201 is in the folded state, the flexible display 230 may not be exposed to the outside of the electronic device 201. When the electronic device 201 is in the folded state, the electronic device 201, under the control of the processor 120, may control the power supplied to the main display 230 to put the main display 230 into a low-power state, a standby state, and/or an off state.

Referring to FIGS. 2B and 2C, the electronic device 201 may have a first length A in a first axial direction (e.g., vertical axis direction, Y-axis direction) and a second length B in a second axial direction (e.g., horizontal axis direction, X-axis direction) of the first housing 211 and the second housing 212 based on the folding axis (axis F1).

In an embodiment, when the electronic device 201 is in the extended state, the length of the frame in the first axial direction (e.g., vertical axis direction, Y-axis direction) of the first housing 211 and the second housing 212 may be greater than the length of the frame in the second axial direction (e.g., horizontal axis direction, X-axis direction) thereof.

In an embodiment, when the electronic device 201 is in the extended state, the main display 230 may be exposed to the outside.

In an embodiment, when the electronic device 201 is in the flex state, the main display 230 may be exposed to the outside, and at least a portion of the main display 230 may be bent.

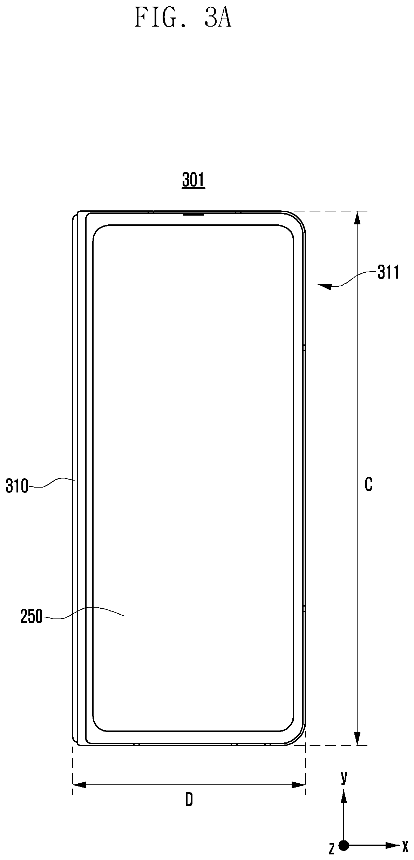

FIG. 3A is a view illustrating a folded state of an electronic device 301 according to an embodiment of the disclosure.

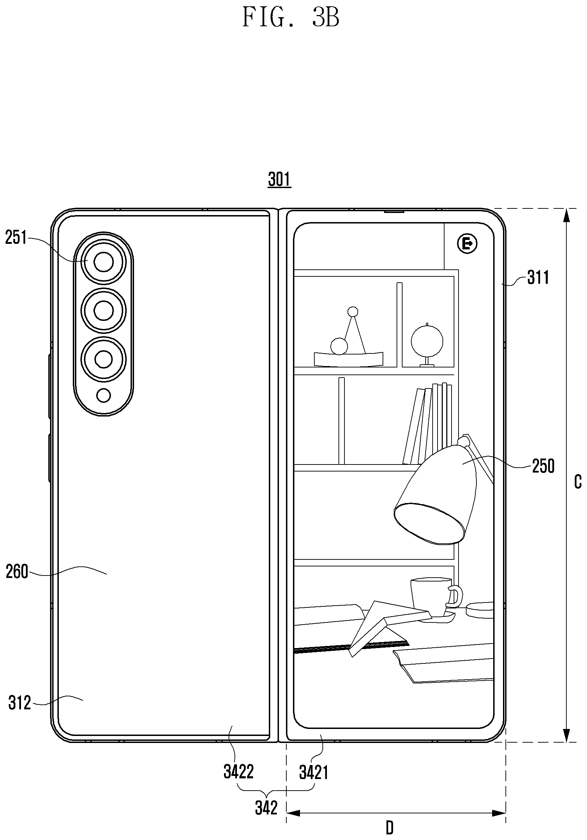

FIG. 3B is a view illustrating an extended state of an electronic device 301 when viewed from the direction of a cover display according to an embodiment of the disclosure.

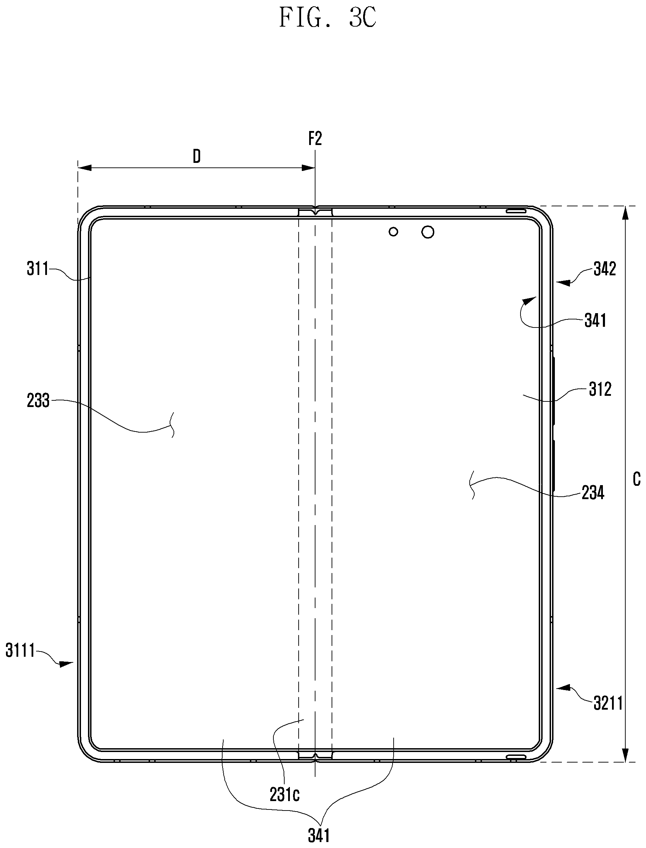

FIG. 3C is a view illustrating an extended state of an electronic device 301 when viewed from the direction of a main display according to an embodiment of the disclosure.

The electronic device 201 in FIG. 3A, FIG. 3B, and FIG. 3C may be identical to the electronic device 101 in FIG. 1. However, the disclosure is not limited thereto, and some components of the electronic device 201 in FIG. 3A, FIG. 3B, and FIG. 3C may be omitted or added compared to the electronic device 101 in FIG. 1.

Referring to FIG. 3A and FIG. 3B, the electronic device 301 may include a hinge 310, a third housing 311, and a fourth housing 312. A foldable housing of the electronic device 301 may include a hinge 210, a third housing 311, and a fourth housing 312.

In an embodiment, the hinge 310 may include one or more hinge assemblies. The hinge 310 may include a free stop hinge. The free stop hinge may fix the foldable housing (e.g., the third housing 311 and the fourth housing 312) at a position desired by the user.

In an embodiment, the electronic device 301 may further include one or more sensors capable of detecting the tilt of the hinge 310. The pair of housing structures 311 and 312 and the hinge 310 of the electronic device 201 are not limited to the forms and couplings shown in FIG. 3A, FIG. 3B, and FIG. 3C, and may be implemented as combinations and/or couplings of other shapes or components.

In an embodiment, the hinge 310 may be positioned in an area where the main display 230 may be bent, and may support the main display 230 so that it maintains a certain angle while bent.

In an embodiment, the main display 230 may include a flexible display that may be bent according to the bending angle of the foldable housing. However, the disclosure is not limited thereto, and the main display 230 may include a rigid display.

In an embodiment, the foldable housing may include lateral members or frames 3111 and 3211 that surround the space between a fifth surface 341 and a sixth surface 342. For example, the foldable housing may include a third frame 3111 that surrounds the space between the fifth surface 341 and the sixth surface 342 of the third housing 311. The foldable housing may include a fourth frame 3211 that surrounds the space between the fifth surface 341 and the sixth surface 342 of the fourth housing 312. The sixth surface 342 may include a seventh surface 3421 and an eighth surface 3422. The third housing 311 may include a seventh surface 3421. The fourth housing 312 may include an eighth surface 3422. The front surface of the foldable housing may include the fifth surface 341. The rear surface of the foldable housing may include the sixth surface 342.

In an embodiment, the foldable housing may include a main display 230 on the fifth surface 341.

In an embodiment, the third housing 311 may include a cover display 250 on the seventh surface 3421.

In an embodiment, the fourth housing 312 may include a cover 260 on the eighth surface 3422. The fourth housing 312 may further include a charging circuit capable of receiving wireless power from the outside or transmitting wireless power to the outside. The charging circuit may include a coil. The charging circuit may transmit and receive power using at least one of magnetic induction, magnetic resonance, or electromagnetic wave methods.

In an embodiment, a wearable device (the wearable device 401 in FIG. 4) may be placed on the cover 260. When the electronic device 301 detects the wearable device (the wearable device 401 in FIG. 4) on the cover 260, the electronic device 301 may transmit power to the wearable device (the wearable device 401 in FIG. 4) through the charging circuit.

In an embodiment, the cover 260 may further include a protruding area in a ring shape so that the wearable device (the wearable device 401 in FIG. 4) may be seated thereon. The electronic device 301 may include a charging circuit in a ring shape, which corresponds to the protruding area, inside the fourth housing 312. However, it is not limited thereto, and in an embodiment, the cover 260 may have a flat shape. The cover 260 may be coupled to the fourth housing 312. However, it is not limited thereto, and the cover 260 may be detachable from the fourth housing 312.

In an embodiment, to align the position between the wearable device (the wearable device 401 in FIG. 4) and the charging circuit, the electronic device 301 may further include a magnet around the charging circuit.

In an embodiment, the wearable device (the wearable device 401 in FIG. 4) may include a magnetic material that reacts to the magnet of the electronic device 301.

In an embodiment, the third frame 3111 may surround the lateral side of the third housing 311, and the fourth frame 3211 may surround the lateral side of the fourth housing 312. The third frame 3111 may be formed as at least part of the third housing 311, and the fourth frame 3211 may be formed as at least part of the fourth housing 312.

In an embodiment, at least a portion of at least one frame 3111 or 3211 may function as an antenna of the electronic device 201. At least a portion of at least one frame 3111 or 3211 may be made of a conductive material (e.g., metal). At least one frame 3111 or 3211 may operate as an antenna under the control of a processor (e.g., the processor 120 in FIG. 1).

In an embodiment, the third housing 311 and the fourth housing 312 may be disposed on both sides of a folding axis (axis F2) and may be folded or unfolded around the folding axis (axis F2).

In an embodiment, the third housing 311 may support a third area 233 of the main display 230. The fourth housing 312 may support a fourth area 234 of the main display 230. The third housing 311 may support the third area 233 of the main display 230 on the fifth surface 341, and the third housing 311 may include a cover display 250 on the sixth surface 342 or the seventh surface 3421.

In an embodiment, the electronic device 301 may determine, under the control of the processor (e.g., the processor 120 in FIG. 1), whether it is in a folded state, a flex state, and/or an extended state, depending on the angle or distance between the third housing 311 and the fourth housing 312.

In an embodiment, the angle or distance between the third housing 311 and the fourth housing 312 may be detected based on one or more sensors included in the electronic device 301. The sensor detecting the angle or distance between the third housing 311 and the fourth housing 312 may be a tilt sensor, for example, an inertial sensor and/or an acceleration sensor.

In an embodiment, when the angle between the third housing 311 and the fourth housing 312 is a first angle (e.g., 0 degrees), the electronic device 301 may determine that it is a folded state under the control of the processor 120.

In an embodiment, when the angle between the third housing 311 and the fourth housing 312 is a second angle (e.g., 180 degrees), the electronic device 301 may determine that it is in an extended state under the control of the processor 120.

In an embodiment, when the angle between the third housing 311 and the fourth housing 312 is within a specific angle range (e.g., a specific angle greater than 0 degrees and less than 180 degrees), the electronic device 301 may determine that it is in a flex state under the control of the processor 120. The flex state may indicate the state in which the electronic device 301 is partially folded.

Referring to FIG. 3A, when the electronic device 201 is in the folded state, the flexible display 230 may not be exposed to the outside of the electronic device 301. When the electronic device 301 is in the folded state, the electronic device 301, under the control of the processor 120, may control the power supplied to the flexible display 230 to put the flexible display 230 into a low-power state, a standby state, and/or an off state.

Referring to FIG. 3B or FIG. 3C, the electronic device 301 may have a third length C in a first axial direction (e.g., vertical axis direction, Y-axis direction) and a fourth length D in the second axial direction (e.g., horizontal axis direction, X-axis direction) of the third housing 311 and the fourth housing 312 around the folding axis (axis F2).

In an embodiment, when the electronic device 301 is in the extended state, the length of the frame in the second axial direction (e.g., horizontal axis direction, X-axis direction) of the third housing 311 and the fourth housing 212 may be greater than the length of the frame in the first axial direction (e.g., vertical axis direction, Y-axis direction) thereof. However, the disclosure is not limited thereto, and when the electronic device 301 is in the extended state, the length of the frame in the second axis direction (e.g., horizontal axis direction, X-axis direction) of the third housing 311 and the fourth housing 212 may be the same as the length of the frame in the first axis direction (e.g., vertical axis direction, Y-axis direction) thereof.

In an embodiment, when the electronic device 301 is in the extended state, the main display 230 may be exposed to the outside.

In another embodiment, when the electronic device 301 is in the flex state, the flexible display 230 may be exposed to the outside, and at least a portion of the flexible display 230 may be bent.

The electronic device 201 in FIGS. 2A, 2B, and 2C may be a clam shell-type foldable electronic device in which the folding axis is the horizontal axis (or X-axis), and the electronic device 301 in FIGS. 3A, 3B, and 3C may be a foldable electronic device in which the folding axis is the vertical axis (or Y-axis).

The electronic device 201 in FIGS. 2A, 2B, and 2C and the electronic device 301 in FIGS. 3A, 3B, and 3C may be an in-folding-type foldable electronic device in which the flexible display 230 is folded inward in the folded state so as to be protected by a pair of housings (e.g., the first housing 211 and the second housing 212 or the third housing 311 and the fourth housing 312).

FIG. 4 is a view illustrating electronic devices 201 and 301 and a wearable device 401 according to an embodiment of the disclosure.

In an embodiment, the wearable device 401 may include at least one of a smart ring, a smart band, or a smart watch. The wearable device 401 may include a sensor.

In an embodiment, the wearable device 401 may obtain biometric information or fitness information of a wearer through the sensor. For example, the wearable device 401 may obtain the wearer's biometric information (e.g., pulse or heart rate) using a photoplethysmography (PPG) sensor or an electrocardiogram (ECG) sensor.

In an embodiment, the wearable device 401 may include a memory (the memory 130 in FIG. 1) and a processor (the processor 120 in FIG. 1).

In an embodiment, the wearable device 401 may store the wearer's biometric information (e.g., pulse or heart rate) obtained through a sensor in the memory (the memory 130 in FIG. 1) under the control of the processor (the processor 120 in FIG. 1).

In an embodiment, the wearable device 401 may store device information regarding the wearable device 401 and information regarding the user of the wearable device 401 in the memory (the memory 130 in FIG. 1). The device information regarding the wearable device 401 may include, for example, a device identification (ID).

In an embodiment, the wearable device 401, under the control of the processor (the processor 120 in FIG. 1), may transmit the wearer's biometric information (e.g., pulse or heart rate) obtained through the sensor to an electronic device 201 or 301 via a communication circuit or coil.

In an embodiment, the wearable device 401 may communicate with electronic devices 201 and 301 using a short-range communication network. The wearable device 401 may include a communication circuit that uses a short-range communication network. The communication circuit may include, for example, Bluetooth Low Energy (BLE), Bluetooth, or near-field communication (NFC). However, the disclosure is not limited thereto, and the wearable device 401 may include a charging circuit and may communicate with the electronic devices 201 and 301 using in-band communication through a coil included in the charging circuit.

In an embodiment, the electronic device 201 in FIGS. 2A, 2B, and 2C may include a communication circuit that uses a short-range communication network. The communication circuit may include, for example, Bluetooth Low Energy (BLE), Bluetooth, or near-field communication (NFC). However, the disclosure is not limited thereto, and the electronic device 201 may include a charging circuit and may communicate with the wearable device 401 using in-band communication through a coil included in the charging circuit.

In an embodiment, the electronic device 301 in FIGS. 3A, 3B, and 3C may include a communication circuit that uses a short-range communication network. The communication circuit may include, for example, Bluetooth Low Energy (BLE), Bluetooth, or near-field communication (NFC). However, the disclosure is not limited thereto, and the electronic device 201 may include a charging circuit and may communicate with the wearable device 401 using in-band communication through a coil included in the charging circuit.

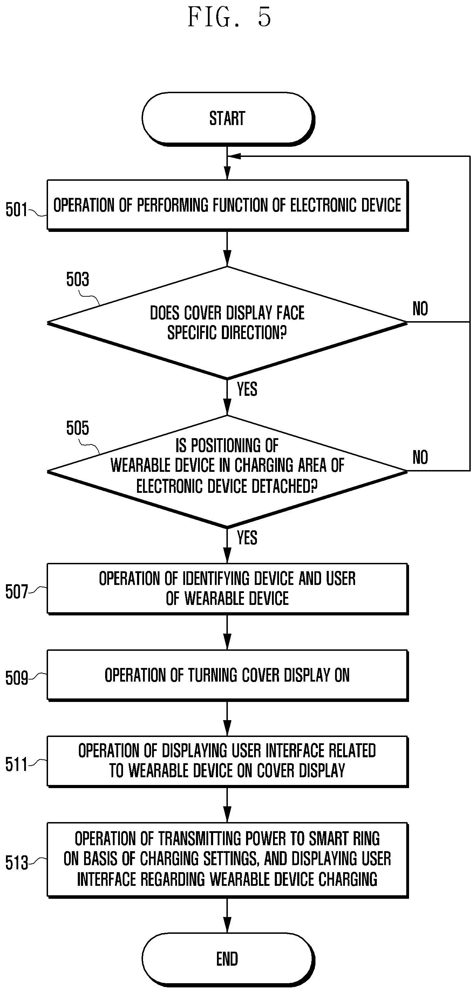

FIG. 5 is a flowchart illustrating a method for providing a user interface of an electronic device (the electronic device 201 in FIG. 2A or the electronic device 301 in FIG. 3A) according to an embodiment of the disclosure.

In an embodiment, the electronic device 101 in FIG. 1 may include the electronic device 201 in FIG. 2A or the electronic device 301 in FIG. 3A.

In an embodiment, in operation 501, the electronic device 101 may execute a function currently being executed under the control of the processor 120.

In an embodiment, in operation 501, the memory 130 stores instructions, and the instructions, when executed by the processor 120, may cause the electronic device 101 to execute the function currently being executed.

In an embodiment, in operation 503, the electronic device 101, under the control of the processor 120, may determine whether a cover display (the cover display 250 in FIG. 2A or the cover display 250 in FIG. 3A) faces a specific direction.

In an embodiment, in operation 503, the memory 130 stores instructions, and the instructions, when executed by the processor 120, may cause the electronic device 101 to determine whether the cover display (the cover display 250 in FIG. 2A or the cover display 250 in FIG. 3A) faces a specific direction.

In an embodiment, the specific direction may include a direction detected based on an acceleration sensor and/or an inertial sensor included in the electronic device 101. The specific direction may include the direction opposite to the ground in which the cover display (the cover display 250 in FIG. 2A or the cover display 250 in FIG. 3A) faces. The specific direction may include the direction in which the cover display (the cover display 250 in FIG. 2A or the cover display 250 in FIG. 3A) faces the air within a specific angle range.

In an embodiment, when the cover display (the cover display 250 in FIG. 2A or the cover display 250 in FIG. 3A) faces the air within a specific angle range, the electronic device 101 may proceed from operation 503 to operation 505.

In an embodiment, when the cover display (the cover display 250 in FIG. 2A or the cover display 250 in FIG. 3A) faces the ground, the electronic device 101 may proceed from operation 503 to operation 501.

In an embodiment, in operation 505, the electronic device 101, under the control of the processor 120, may determine whether the wearable device (the wearable device 401 in FIG. 4) is positioned in the charging area of the electronic device 101.

In an embodiment, in operation 505, the memory 130 stores instructions, and the instructions, when executed by the processor 120, may cause the electronic device 101 to determine whether the wearable device (the wearable device 401 in FIG. 4) is positioned in the charging area of the electronic device 101.

In an embodiment, the charging area may include an area where the electronic device 101 wirelessly transmits power to the outside or wirelessly receives power from the outside. The charging area may include an area corresponding to a charging circuit disposed inside the second housing 212 in FIG. 2B or inside the fourth housing 312 in FIG. 3B. The charging area may include an area corresponding to the cover 260.

In an embodiment, when the wearable device (the wearable device 401 in FIG. 4) is positioned in the charging area of the electronic device 101, the electronic device 101 may proceed from operation 505 to operation 507.

In an embodiment, in operation 507, the electronic device 101 may identify one or more of a user of the wearable device or a device name thereof under the control of the processor 120.

In an embodiment, in operation 507, the electronic device 101 may establish a communication connection with the wearable device under the control of the processor 120.

In an embodiment, in operation 507, the electronic device 101, under the control of the processor 120, may establish a communication connection with the wearable device and identify one or more of a user of the wearable device or a device name thereof. The device name may include, for example, the type and model of the device as well as the ID of the device.

In an embodiment, in operation 507, the electronic device 101, under the control of the processor 120, may establish a communication connection with the wearable device by performing operation 505 without performing operation 503.

In an embodiment, in operation 507, the memory 130 stores instructions, and the instructions, when executed by the processor 120, may cause the electronic device 101 to identify one or more of a user of the wearable device 401 or a device name thereof.

In an embodiment, when the cover display (the cover display 250 in FIG. 2A or the cover display 250 in FIG. 3A) faces a specific direction and the wearable device (the wearable device 401 in FIG. 4) is positioned in the charging area of the electronic device 101, the electronic device 101, under the control of the processor 120, may identify one or more of the user or device name of the wearable device.

In an embodiment, when the wearable device (the wearable device 401 in FIG. 4) is positioned in the charging area of the electronic device 101, the electronic device 101, under the control of the processor 120, may identify one or more of the user or device name of the wearable device.

In an embodiment, without performing operation 503 and operation 505 in advance, when an input of tapping a specific area of the electronic device 101 a specified number of times using the wearable device 401 is detected, the electronic device 101, under the control of the processor 120, may identify one or more of the user or device name of the wearable device 401. The memory 130 stores instructions, and the instructions, when executed by the processor 120, may cause the electronic device 101 to identify one or more of the user or device name of the wearable device 401 when an input of tapping a specific area of the electronic device 101 a specified number of times using the wearable device 401 is detected.

In an embodiment, in operation 509, the electronic device 101 may turn on the cover display (the cover display 250 in FIG. 2A or the cover display 250 in FIG. 3A) under the control of the processor 120.

In an embodiment, in operation 509, the electronic device 101 may use the cover display (the cover display 250 in FIG. 2A or the cover display 250 in FIG. 3A) under the control of the processor 120.

In an embodiment, in operation 509, the electronic device 101 may activate the cover display (the cover display 250 in FIG. 2A or the cover display 250 in FIG. 3A) under the control of the processor 120.

In an embodiment, when turning on the cover display (the cover display 250 in FIG. 2A or the cover display 250 in FIG. 3A), the electronic device 101 may turn on the cover display (the cover display 250 in FIG. 2A or the cover display 250 in FIG. 3A) as an always-on display (AOD).

In an embodiment, if the cover display (the cover display 250 in FIG. 2A or the cover display 250 in FIG. 3A) is in a turn-on state, operation 509 may be omitted.

In an embodiment, when the cover display (the cover display 250 in FIG. 2A or the cover display 250 in FIG. 3A) is activated in advance, operation 509 may be omitted.

In an embodiment, in operation 511, the electronic device 101, under the control of the processor 120, may display a user interface related to the wearable device 401 on the cover display (the cover display 250 in FIG. 2A or the cover display 250 in FIG. 3A).

In an embodiment, in operation 511, the memory 130 stores instructions, and the instructions, when executed by the processor 120, may cause the electronic device 101 to display the user interface related to the wearable device 401 on the cover display (the cover display 250 in FIG. 2A or the cover display 250 in FIG. 3A).

In an embodiment, in operation 511, the electronic device 101, under the control of the processor 120, may display an animation in which an image indicating the wearable device moves from an area of the cover display (the cover display 250 in FIG. 2A or the cover display 250 in FIG. 3A) corresponding to the coordinates of the wearable device 401 on the charging area to a central area of the cover display (the cover display 250 in FIG. 2A or the cover display 250 in FIG. 3A).

In an embodiment, in operation 511, the memory 130 stores instructions, and the instructions, when executed by the processor 120, may cause the electronic device 101 to display an animation in which an image indicating the wearable device moves from an area of the cover display (the cover display 250 in FIG. 2A or the cover display 250 in FIG. 3A) corresponding to the coordinates of the wearable device 401 on the charging area to a central area of the cover display (the cover display 250 in FIG. 2A or the cover display 250 in FIG. 3A).

In an embodiment, the electronic device 101, under the control of the processor 120, may map the coordinates of the charging area and the coordinates of the cover display (the cover display 250 in FIG. 2A or the cover display 250 in FIG. 3A) and store the same in the memory 130.

In an embodiment, in operation 511, the electronic device 101 may display an indicator related to screen rotation or screen switching on the cover display (the cover display 250 in FIG. 2A or the cover display 250 in FIG. 3A) under the control of the processor 120.

In an embodiment, in operation 511, the memory 130 stores instructions, and the instructions, when executed by the processor 120, may cause the electronic device 101 to display an indicator related to screen rotation or screen switching on the cover display (the cover display 250 in FIG. 2A or the cover display 250 in FIG. 3A).

In an embodiment, when a user input for the indicator related to the screen rotation is received, the electronic device 101, under the control of the processor 120, may change the display direction of the cover display (the cover display 250 in FIG. 2A or the cover display 250 in FIG. 3A). When a user input for the indicator related to the screen rotation is received, the electronic device 101, under the control of the processor 120, may change the up and down direction of a currently displayed screen of the cover display (the cover display 250 in FIG. 2A or the cover display 250 in FIG. 3A).

In an embodiment, when the connection between the wearable device 401 and the electronic device 101 is the first connection, in operation 511, the electronic device 101 may display a user interface regarding the registration and/or data backup of the wearable device 401 under the control of the processor 120.

In an embodiment, when the connection between the wearable device 401 and the electronic device 101 is the first connection, in operation 511, the memory 130 stores instructions, and the instructions, when executed by the processor 120, may cause the electronic device 101 to display a user interface regarding the registration and/or data backup of the wearable device 401.

In an embodiment, in operation 511, the electronic device 101, under the control of the processor 120, may identify the user of the wearable device 401 and display the avatar of the identified user as a user interface on the cover display (the cover display 250 in FIG. 2A or the cover display 250 in FIG. 3A).

In an embodiment, in operation 511, the memory 130 stores instructions, and the instructions, when executed by the processor 120, may cause the electronic device 101 to identify the user of the wearable device 401 and display the avatar of the identified user as a user interface on the cover display (the cover display 250 in FIG. 2A or the cover display 250 in FIG. 3A).

For example, the electronic device 101 may transmit information regarding the user of the wearable device 401 to a server and receive information regarding the avatar of the user of the wearable device 401 from the server. However, the disclosure is not limited thereto, and the electronic device 101 may pre-store information regarding the avatar of the user of the wearable device 401 in the memory 130.

In an embodiment, when there is a task running on the cover display (the cover display 250 in FIG. 2A or the cover display 250 in FIG. 3A), in operation 511, the electronic device 101, under the control of the processor 120, may display a user interface related to the wearable device 401 without obscuring the area of the task running.

In an embodiment, when there is a task running on the cover display (the cover display 250 in FIG. 2A or the cover display 250 in FIG. 3A), in operation 511, the memory 130 stores instructions, and the instructions, when executed by the processor 120, may cause the electronic device 101 to display a user interface related to the wearable device 401 without obscuring the area of the task running.

In an embodiment, regardless of operations 501 to 509, in operation 511, the electronic device 101, under the control of the processor 120, may display a user interface related to the wearable device 401 upon receiving a user input on the cover display (the cover display 250 in FIG. 2A or the cover display 250 in FIG. 3A).

In an embodiment, regardless of operations 501 to 509, in operation 511, the electronic device 101, under the control of the processor 120, may display an image representing the wearable device 401 upon receiving a user input on the cover display (the cover display 250 in FIG. 2A or the cover display 250 in FIG. 3A).

In an embodiment, regardless of operations 501 to 509, in operation 511, the electronic device 101, under the control of the processor 120, may display an application related to the wearable device 401 on the cover display (the cover display 250 in FIG. 2A or the cover display 250 in FIG. 3A) upon receiving a user input on the cover display (the cover display 250 in FIG. 2A or the cover display 250 in FIG. 3A).

In an embodiment, the memory 130 stores instructions, and the instructions, when executed by the processor 120, may cause the electronic device 101 to display a user interface related to the wearable device 401 on the cover display (the cover display 250 in FIG. 2A or the cover display 250 in FIG. 3A) upon receiving a user input on the cover display.

In an embodiment, the user input may include a gesture input on the cover display (the cover display 250 in FIG. 2A or the cover display 250 in FIG. 3A). The gesture input may include an input that traces the shape of the wearable device 401 on the cover display (the cover display 250 in FIG. 2A or the cover display 250 in FIG. 3A). While the gesture input is received on the cover display (the cover display 250 in FIG. 2A or the cover display 250 in FIG. 3A), the electronic device 101 may display an animation tracking the gesture input under the control of the processor 120.

In an embodiment, in operation 511, the electronic device 101, under the control of the processor 120, may determine the position of the wearable device 401 on the charging area. In operation 511, the electronic device 101, under the control of the processor 120, may display, on the cover display (the cover display 250 in FIG. 2A or the cover display 250 in FIG. 3A), a guide as the user interface to induce the movement of the wearable device 401 to an area within the charging area where the power reception efficiency is higher than a specified efficiency.

In an embodiment, in operation 511, the memory 130 stores instructions, and the instructions, when executed by the processor 120, may cause the electronic device 101 to display, on the cover display (the cover display 250 in FIG. 2A or the cover display 250 in FIG. 3A), a guide as the user interface to induce the movement of the wearable device 401 to an area within the charging area where the power reception efficiency is higher than a specified efficiency.

In an embodiment, in operation 513, the electronic device 101, under the control of the processor 120, may transmit power to the wearable device 401 based on charging configuration and display a user interface regarding the charging of the wearable device 401 on the cover display (the cover display 250 in FIG. 2A or the cover display 250 in FIG. 3A).

In an embodiment, in operation 511, the electronic device 101, under the control of the processor 120, may display a user interface 1420 regarding a positioning guide on the cover display 250. The user interface 1420 regarding the positioning guide may include, for example, a warning message indicating that charging may be stopped when the wearable device 401 moves out of the charging area.

In an embodiment, in operation 513, the memory 130 stores instructions, and the instructions, when executed by the processor 120, may cause the electronic device 101 to transmit power to the wearable device 401 based on charging configuration and display a user interface regarding the charging of the wearable device 401 on the cover display (the cover display 250 in FIG. 2A or the cover display 250 in FIG. 3A).

In an embodiment, when a gesture of turning the lateral side of the wearable device 401 is received, the electronic device 101, under the control of the processor 120, may configure the amount of power of a battery (e.g., the battery 189 in FIG. 1) included in the wearable device 401 according to the amount of movement of the gesture. Based on the configured amount of power of the wearable device 401, the electronic device 101, under the control of the processor 120, may wirelessly transmit power to the wearable device 401 through the charging circuit. The charging configuration may include an operation of configuring the amount of power of the battery (e.g., the battery 189 in FIG. 1) included in the wearable device 401.

In an embodiment, when a gesture of turning the lateral side of the wearable device 401 is received, the memory 130 stores instructions, and the instructions, when executed by the processor 120, may cause the electronic device 101 to configure the amount of power of the battery (e.g., the battery 189 in FIG. 1) included in the wearable device 401 according to the amount of movement of the gesture.

In an embodiment, when a user interface related to a jog dial is displayed on the cover display 250 and a gesture of turning the jog dial is received, the electronic device 101, under the control of the processor 120, may configure the amount of power of the battery (e.g., battery 189 in FIG. 1) included in the wearable device 401 according to the amount of movement of the gesture.

In an embodiment, in operation 513, when the wearable device 401 leaves the charging area without having received power equal to the configured amount of power of the battery (e.g., the battery 189 in FIG. 1) of the wearable device 401, the electronic device 101, under the control of the processor 120, may display a user interface indicating the departure on the cover display (the cover display 250 in FIG. 2A or the cover display 250 in FIG. 3A).

In an embodiment, the memory 130 stores instructions, and the instructions, when executed by the processor 120, may cause the electronic device 101 to display, when the wearable device 401 leaves the charging area without having received power equal to the configured amount of power of the battery (e.g., the battery 189 in FIG. 1) of the wearable device 401, a user interface indicating the departure on the cover display (the cover display 250 in FIG. 2A or the cover display 250 in FIG. 3A).

In an embodiment, in operation 513, when the wearable device 401 leaves the charging area without having received power equal to the configured amount of power of the battery (e.g., the battery 189 in FIG. 1) of the wearable device 401, the electronic device 101, under the control of the processor 120, may display, on the cover display (the cover display 250 in FIG. 2A or the cover display 250 in FIG. 3A), a guide to position the wearable device 401 in the charging area.

In an embodiment, the memory 130 stores instructions, and the instructions, when executed by the processor 120, may cause the electronic device 101 to display, when the wearable device 401 leaves the charging area without having received power equal to the configured amount of power of the battery (e.g., the battery 189 in FIG. 1) of the wearable device 401, a guide to position the wearable device 401 in the charging area on the cover display (the cover display 250 in FIG. 2A or the cover display 250 in FIG. 3A).

In an embodiment, in operation 513, the electronic device 101, under the control of the processor 120, may display a user interface indicating that charging is complete on the cover display (the cover display 250 in FIG. 2A or the cover display 250 in FIG. 3A) when power equal to the configured amount of power of the battery of the wearable device 401 (e.g., battery 189 in FIG. 1) is received.

In an embodiment, the memory 130 stores instructions, and the instructions, when executed by the processor 120, may cause the electronic device 101 to display a user interface indicating that charging is complete on the cover display (the cover display 250 in FIG. 2A or the cover display 250 in FIG. 3A) when power equal to the configured amount of power of the battery of the wearable device 401 (e.g., battery 189 in FIG. 1) is received.

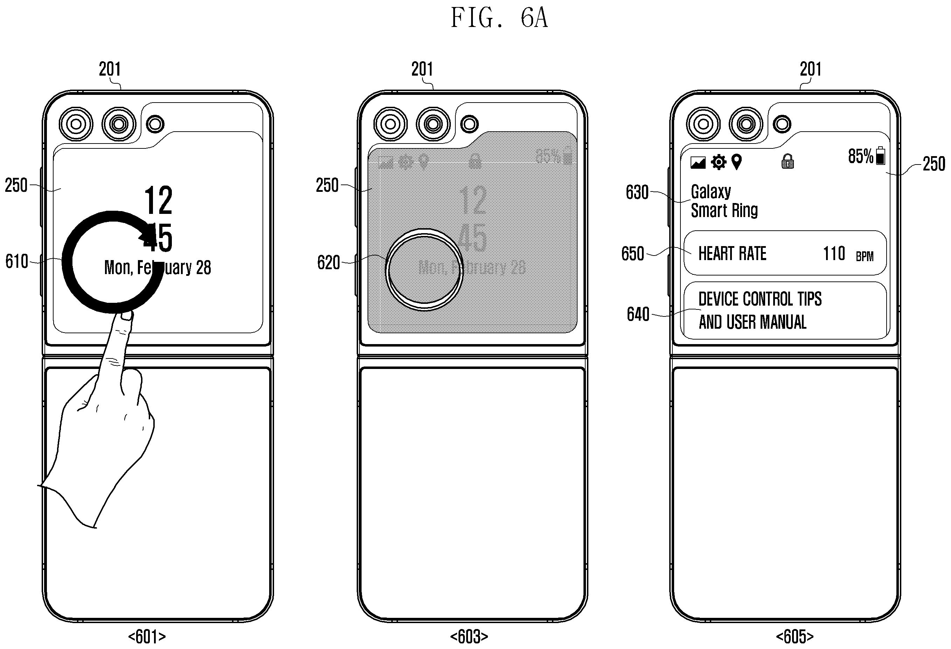

FIG. 6A is a view illustrating the operation of displaying a user interface related to a wearable device 401 when user input is received on a cover display 250 according to an embodiment of the disclosure.

The electronic device 201 in FIG. 6A has a foldable housing in an extended state.

In FIG. 601, the electronic device 201 may receive s gesture input on the cover display 250.

In an embodiment, the gesture input may include an input that traces the shape of the wearable device 401 on the cover display 250. For example, the wearable device 401 may include a smart ring. The gesture input may include an input that draws a circle corresponding to the shape of the smart ring on the cover display 250.

In an embodiment, while a gesture input is received on the cover display 250, the electronic device 101, under the control of the processor 120, may display an animation 610 as a user interface tracking the gesture input.

In screen 603, when the electronic device 201 receives a gesture input on the cover display 250, the electronic device 201 may display an image 620 representing the wearable device 401 on the cover display 250. The image 620 representing the wearable device 401 may include a real image of the wearable device 401. The image 620 representing the wearable device 401 may be displayed as a popup.

In an embodiment, when the electronic device 201 receives a gesture input on the cover display 250, the electronic device 201 may display an image 620 representing the wearable device 401 in an area on the cover display 250 corresponding to the position where the gesture input was received.

In screen 605, when the electronic device 201 receives a gesture input on the cover display 250, the electronic device 201 may display an application 630 related to the wearable device 401 on the cover display 250. The application 630 related to the wearable device 401 may include an application capable of identifying data stored in the wearable device 401.

For example, the application 630 related to the wearable device 401 may include information 650 regarding heart rate and/or information 640 regarding device control. The information 640 regarding device control may include, for example, information regarding the control of a function to enable or disable a battery sharing function for charging the wearable device 401.

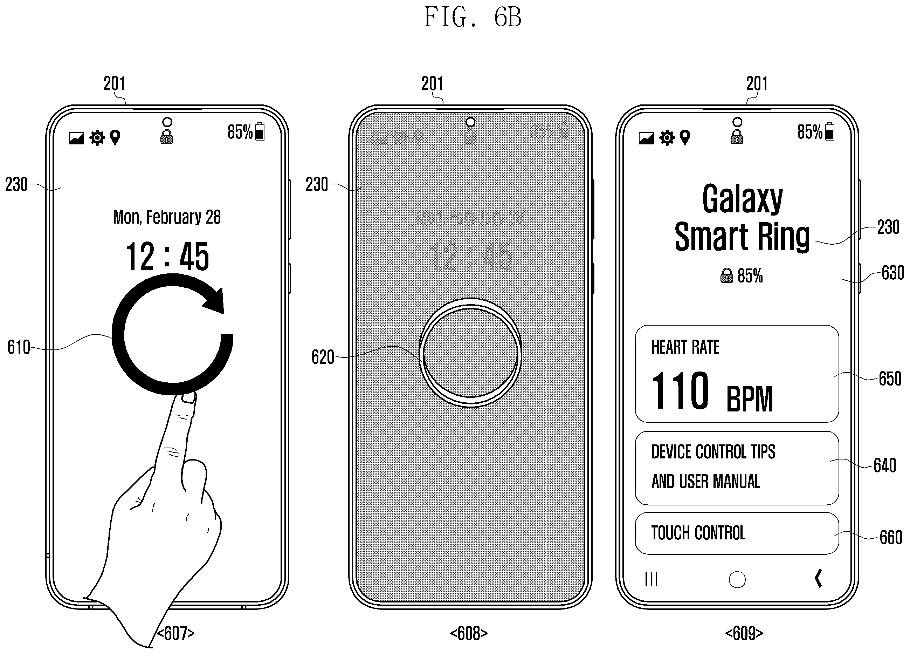

FIG. 6B is a view illustrating the operation of displaying a user interface related to a wearable device 401 when user input is received on a main display 230 according to an embodiment of the disclosure.

The electronic device 201 in FIG. 6B has a foldable housing in an extended state.

In screen 607, the electronic device 201 may receive a gesture input on the main display 230.

In an embodiment, the gesture input may include an input traces the shape of the wearable device 401 on the main display 230. For example, the wearable device 401 may include a smart ring. The gesture input may include an input that draws a circle corresponding to the shape of the smart ring on the main display 230.

In an embodiment, while a gesture input is received on the main display 230, the electronic device 201, under the control of the processor 120, may display an animation 610 as a user interface tracking the gesture input.

In screen 609, when the electronic device 201 receives a gesture input on the main display 230, the electronic device 201 may display an image 620 representing the wearable device 401 on the main display 230. The image 620 representing the wearable device 401 may include a real image of the wearable device 401. The image 620 representing the wearable device 401 may be displayed as a popup.

In an embodiment, when the electronic device 201 receives a gesture input on the main display 230, the electronic device 201 may display an image 620 representing the wearable device 401 in an area on the main display 230 corresponding to the position where the gesture input was received.

In screen 609, when the electronic device 201 receives a gesture input on the main display 230, the electronic device 201 may display an application 630 related to the wearable device 401 on the main display 230. The application 630 related to the wearable device 401 may include an application capable of identifying data stored in the wearable device 401.

For example, the application 630 related to the wearable device 401 may include information 640 regarding device control, information 650 regarding heart rate, and/or information 660 regarding touch control. The information 640 regarding device control may include, for example, information regarding the control of a function to enable or disable a battery sharing function for charging the wearable device 401.

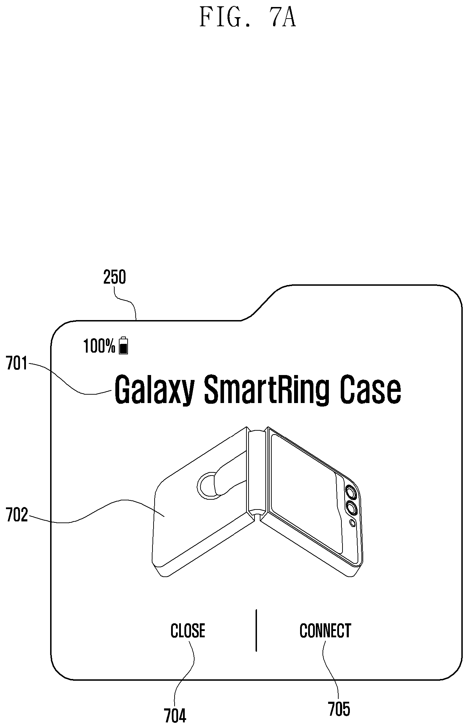

FIG. 7A is a view illustrating the operation of displaying a user interface related to a wearable device 401 in an electronic device 201 according to an embodiment of the disclosure.

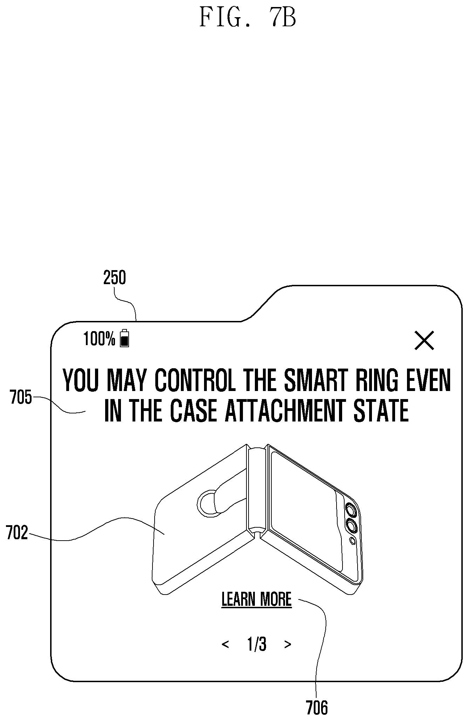

FIG. 7B is a view illustrating the operation of displaying a user interface related to a wearable device 401 in an electronic device 201 according to an embodiment of the disclosure.

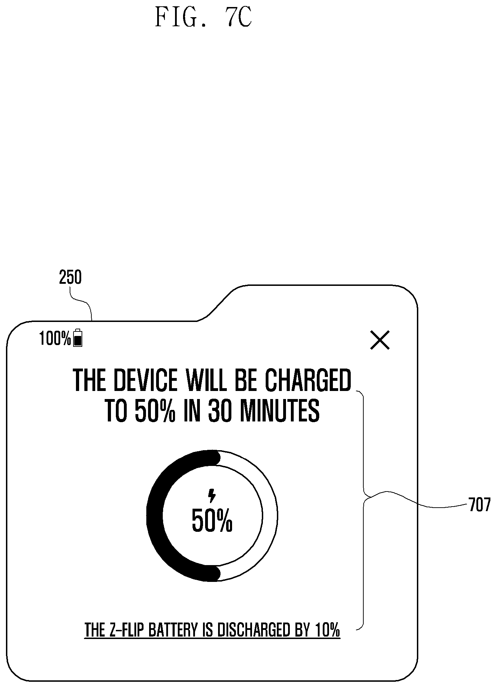

FIG. 7C is a view illustrating the operation of displaying a user interface related to a wearable device 401 in an electronic device 201 according to an embodiment of the disclosure.

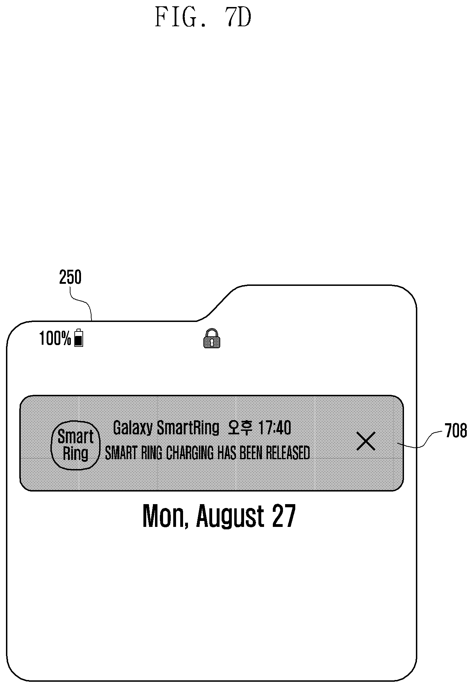

FIG. 7D is a view illustrating the operation of displaying a user interface related to a wearable device 401 in an electronic device 201 according to an embodiment of the disclosure.

The cover 260 of the electronic device 201 in FIGS. 7A, 7B, 7C, and 7D may include a protruding area on which the wearable device 401 may be seated. However, the disclosure is not limited thereto, and the cover 260 of the electronic device 201 in FIGS. 7A, 7B, 7C, and 7D may further include a strap or hook capable of hanging the wearable device 401.

The electronic device 201 in FIGS. 7A, 7B, 7C, and 7D may keep the wearable device 401 in the charging area even when mounted in various positions.

The electronic device 201 in FIGS. 7A, 7B, and 7C may be mounted with the main display 230 facing the floor while the foldable housing is in a flex state. When the main display 230 faces the floor while the foldable housing is in a flex state, the electronic device 201, under the control of the processor 120, may determine that it is in tent mode.

The electronic device 201 in FIG. 7D may have a foldable housing in an extended state.

Referring to FIG. 7A, the electronic device 201 may display a user interface 701 (e.g., Galaxy Smartring case) indicating that the wearable device 401 is connected using a cover 260 capable of mounting the wearable device on the cover display 250.

Referring to FIG. 7A, the electronic device 201 may display, on the cover display 250, an image 702 indicating that the electronic device 201 is in a mountable state (e.g., tent mode).

Referring to FIG. 7A, when the connection between the wearable device 401 and the electronic device 201 is the first connection, the electronic device 201 may display a user interface 704, 705 asking whether to connect on the cover display 250. Close 704 may include a user interface indicating whether to terminate the connection between the wearable device 401 and the electronic device 201. When a user input is received for Close 704, the electronic device 201 may terminate the connection between the wearable device 401 and the electronic device 201. Connect 705 may include a user interface indicating whether to connect the wearable device 401 and the electronic device 101. When a user input is received for Connect 705, the electronic device 201 may connect the wearable device 401 and the electronic device 201. The connection between the wearable device 401 and the electronic device 101 may include a communication connection via short-range communication or in-band communication.

Referring to FIGS. 7A and 7B, when a user input is received for Connect 705, the electronic device 201 may display a user interface 705, 706 indicating a user guide for the wearable device 401 (e.g., You may control the smart ring even in the case attachment state) (e.g., Learn more) on the cover display 250.

Referring to FIG. 7B, the electronic device 201 may display, on the cover display 250, an image 702 indicating a mountable state (e.g., tent mode) of the electronic device 201.

Referring to FIG. 7C, when the wearable device 401 corresponds to the charging area and the cover display 250 faces the air within a specific angle range, the electronic device 201, under the control of the processor 120, may transmit power to the wearable device 401 using the charging circuit and include a user interface 707 regarding the charging of the wearable device 401.

Referring to FIG. 7C, when the wearable device 401 corresponds to the charging area and the electronic device 201 is in tent mode, the electronic device 201, under the control of the processor 120, may transmit power to the wearable device 401 using the charging circuit and include a user interface 707 regarding the charging of the wearable device 401.

Referring to FIG. 7C, when the wearable device 401 corresponds to the charging area and an input of tapping a specific area of the wearable device 401 a specified number of times is detected, the electronic device 201, under the control of the processor 120, may transmit power to the wearable device 401 using the charging circuit and include a user interface 707 regarding the charging of the wearable device 401.

In an embodiment, the user interface 707 regarding the charging of the wearable device 401 may include information about the time required to charge the battery of the wearable device 401 (e.g., The device will be charged to 50% in 30 minutes), an animation for the battery charging of the wearable device 401, and/or information about the battery status of the electronic device 201 (e.g., The Z-Flip battery is discharged by 10%).

Referring to FIG. 7D, when the charging of the wearable device 401 is terminated, the electronic device 201 may display a user interface 708 regarding the termination of charging of the wearable device 401 (e.g., Smart ring charging has been released).

In an embodiment, when the cover display 250 does not face the air within a specific angle range, the electronic device 201 may stop transmitting power to the wearable device 401 and terminate charging.

In an embodiment, when the tent mode is terminated, the electronic device 201 may stop transmitting power to the wearable device 401 and terminate charging.

In an embodiment, when an input of tapping a specific area of the wearable device 401 a specified number of times is detected, the electronic device 201 may stop transmitting power to the wearable device 401 and terminate charging.

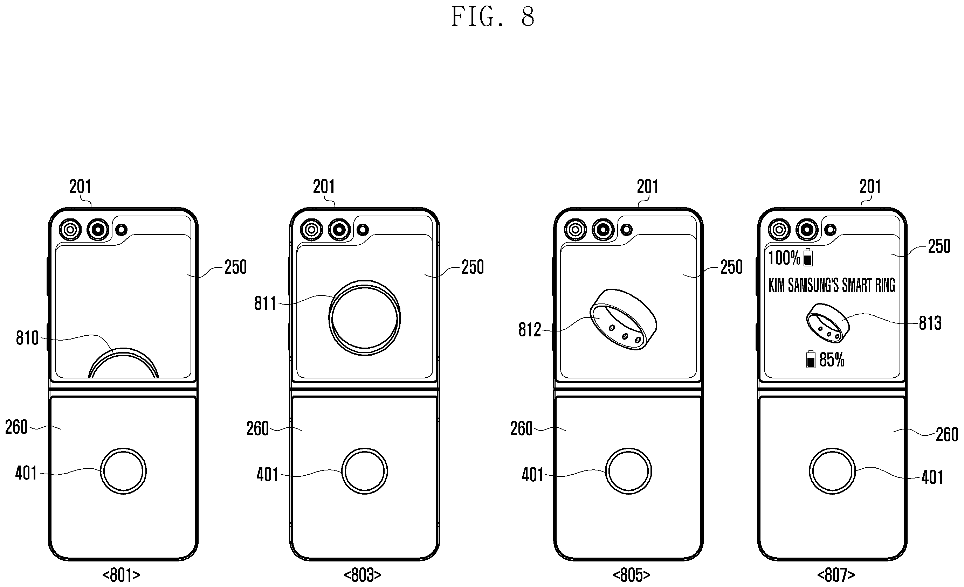

FIG. 8 is a view illustrating the operation of displaying a user interface related to a wearable device 401 in an electronic device 201 according to an embodiment of the disclosure.

The electronic device 201 in FIG. 8 has a foldable housing in an extended state.

In screen 801, when the cover display 250 faces a specific direction (e.g., upward) and the wearable device 401 is positioned in the charging area of the electronic device 101, the electronic device 201 may display a user interface related to the wearable device 401 on the cover display 250. The user interface related to the wearable device 401 may include an image 810 representing the wearable device 401 as a fade-in animation.

In screen 801, the position where the image 810 representing the wearable device 401 is displayed on the cover display 250 may correspond to the coordinates of the wearable device 401 in the cover 260 or the charging area.

In an embodiment, the electronic device 101, under the control of the processor 120, may map the coordinates of the charging area and the coordinates of the cover display (the cover display 250 in FIG. 2A or the cover display 250 in FIG. 3A) and store the same in the memory 130.

In screen 801, the image 810 representing the wearable device 401 may include a partial image of the wearable device 401.

In screen 803 following screen 801, the electronic device 201 may display an animation in which the image 811 representing the wearable device moves to the central area of the cover display 250.

In screen 803, the image 811 representing the wearable device 401 may include an entire image of the wearable device 401.

In screen 805, the electronic device 401, under the control of the processor 120, may display a user interface 812 regarding the connection between the wearable device 401 and the electronic device 401 on the cover display 250.

In screen 807, when the wearable device 401 and the electronic device 401 are connected, the electronic device 401, under the control of the processor 120, may display a user interface 813 for the wearable device 401 on the cover display 250. The user interface 813 for the wearable device 401 may include information indicating the user of the wearable device 401 (e.g., Kim Samsung's Smart ring), information indicating the shape of the wearable device 401, and/or information 813 indicating the battery status of the wearable device 401.

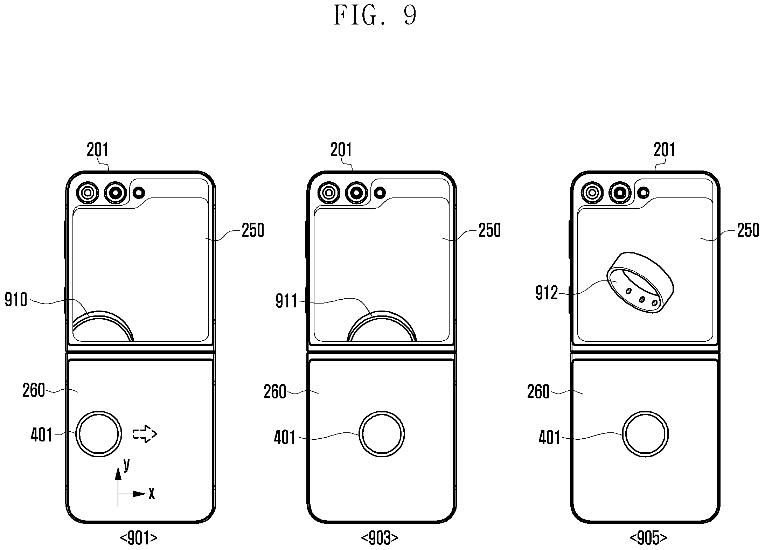

FIG. 9 is a view illustrating the operation of displaying a user interface related to a wearable device 401 in an electronic device 201 according to an embodiment of the disclosure.

The electronic device 201 in FIG. 9 has a foldable housing in an extended state.

In screen 901, when the cover display 250 faces a specific direction (e.g., upward) and the wearable device 401 is positioned in the charging area of the electronic device 101, the electronic device 201 may display a user interface related to the wearable device 401 on the cover display 250. The user interface related to the wearable device 401 may include an image 910 representing the wearable device 401 as a fade-in animation.

In screen 903 following screen 901, when the position of the wearable device 401 changes on the charging area, the display position of the image 911 representing the wearable device 401 may change on the cover display 250.

In screen 905, the electronic device 401, under the control of the processor 120, may display a user interface 912 regarding the connection between the wearable device 401 and the electronic device 401 on the cover display 250.

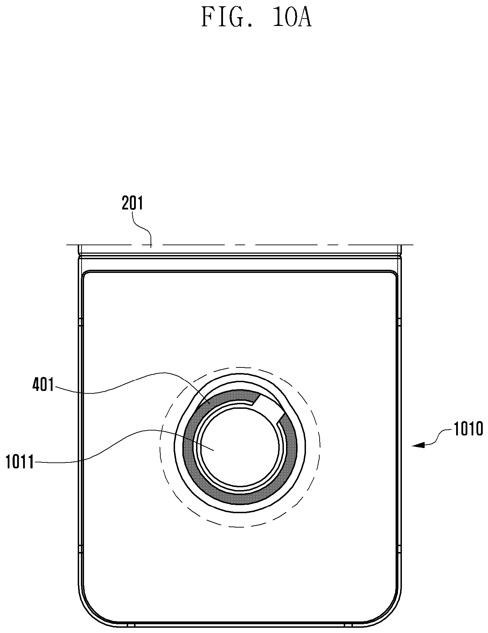

FIG. 10A is a view illustrating a cover 260 of the electronic device 201 in FIG. 2B according to an embodiment of the disclosure.

In an embodiment, the cover 260 of the electronic device 201 may include a protruding area 1011 on which a wearable device 401 may be seated. The protruding area 1011 may include a coil of a charging circuit. However, the disclosure is not limited thereto, and the cover 260 including the protruding area 1011 of the electronic device 201 may be detachable. The electronic device 201 may allow the wearable device 401 to be seated on the rear surface of the electronic device 201 (e.g., the fourth surface 2422 of the second housing 211) independently of the cover 260.

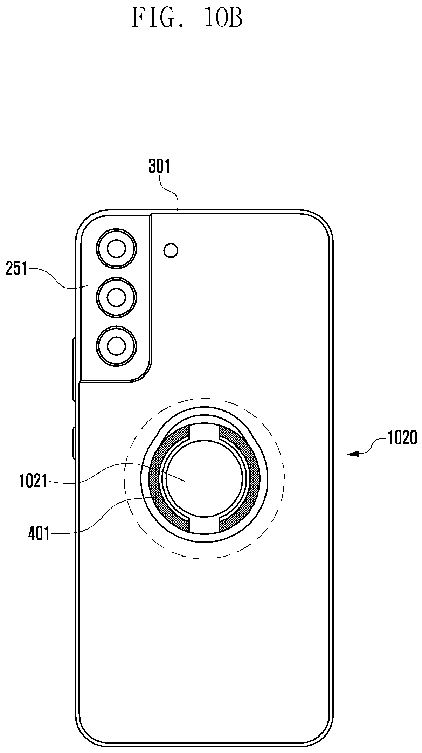

FIG. 10B is a view illustrating a cover 260 of the electronic device 301 in FIG. 3B according to an embodiment of the disclosure.

In an embodiment, the cover 260 of the electronic device 301 may include a protruding area 1021 on which a wearable device 401 may be seated. The protruding area 1021 may include a coil of a charging circuit.

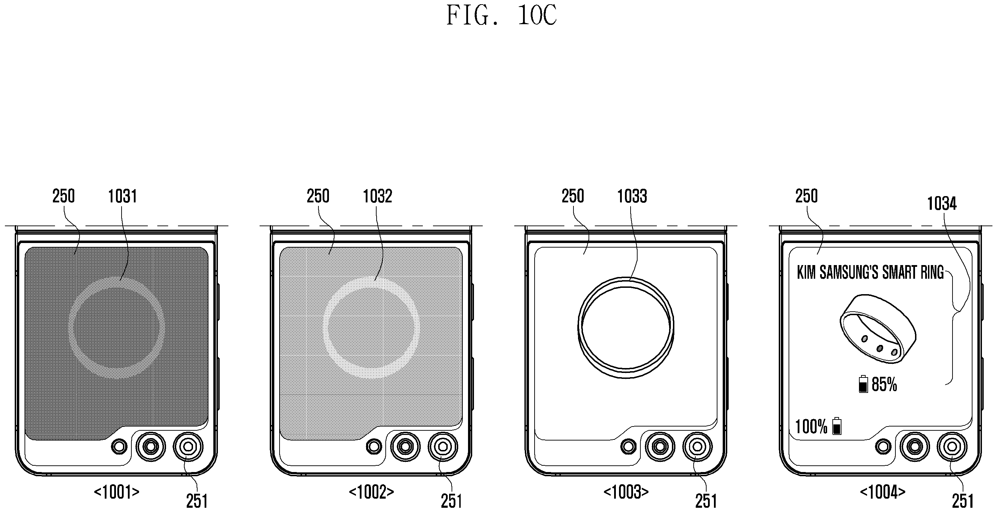

FIG. 10C is a view illustrating the user interface displayed on a cover display 250 when a wearable device 401 is seated on the protruding area 1011 of the cover 260 in FIG. 10A according to an embodiment of the disclosure.

The electronic device 201 in FIG. 10C has a foldable housing in a folded state.

In screens 1001, 1003, and 1005, when a wearable device 401 is seated on the protruding area 1011 of the cover 260, images 1031, 1032, and 1033 representing the wearable device 401 may be displayed like a fade-in animation.

In screens 1001, 1003, and 1005, when a wearable device 401 is seated on the protruding area 1011 of the cover 260, images 1031, 1032, and 1033 representing the wearable device 401 may be displayed clearly in sequence.

In screen 1004, the electronic device 401, under the control of the processor 120, may display a user interface 1034 for the wearable device 401 on the cover display 250. The user interface 1034 for the wearable device 401 may include information indicating the user of the wearable device 401 (e.g., Kim Samsung's Smart ring), information indicating the shape of the wearable device 401, and/or information indicating the battery status of the wearable device 401.

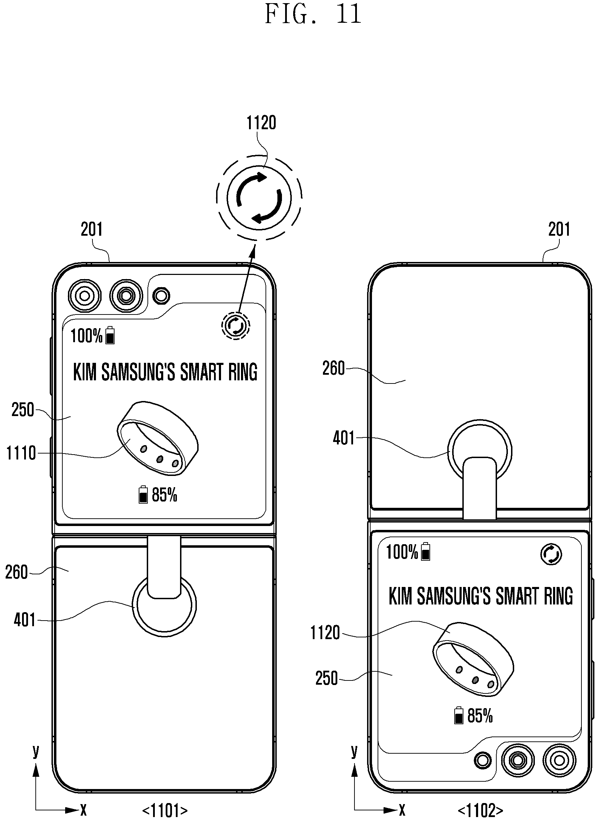

FIG. 11 is a view illustrating the operation of displaying an indicator related to screen rotation or screen switching on a cover display 250 of an electronic device 201 according to an embodiment of the disclosure.

The electronic device 201 in FIG. 11 may have a foldable housing in an extended state.

In an embodiment, the electronic device 101, under the control of the processor 120, may display an indicator 1120 related to screen rotation or screen switching on the cover display 250.

In screen 1101, the electronic device 401, under the control of the processor 120, may display a user interface 1110 for the wearable device 401 and an indicator 1120 related to screen rotation or screen switching on the cover display 250. The user interface 1110 for the wearable device 401 may include information indicating the user of the wearable device 401 (e.g., Kim Samsung's Smart ring), information indicating the shape of the wearable device 401, and/or information indicating the battery status of the wearable device 401.

In screen 1102, when receiving a user input for the indicator 1120 related to screen rotation or screen switching, the electronic device 101, under the control of the processor 120, may change the display direction of the screen currently being displayed on the cover display 250. For example, the electronic device 101 may change the up and down direction of the screen currently being displayed.

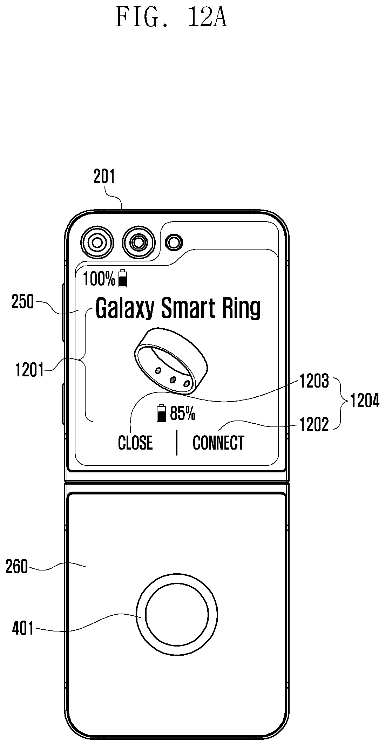

FIG. 12A is a view illustrating the first connection between a wearable device 401 and an electronic device 101 according to an embodiment of the disclosure.

In an embodiment, if the connection between the wearable device 401 and the electronic device 101 is the first connection, the electronic device 101, under the control of the processor 120, may display a user interface 1204 regarding the registration of the wearable device 401 on the cover display 250.

In an embodiment, the user interface 1204 for the registration of the wearable device 401 may include a user interface 1203, 1202 asking whether to connect with the wearable device 401. Close 1203 may include a user interface indicating whether to terminate the connection between the wearable device 401 and the electronic device 201. When a user input is received for Close 1203, the electronic device 201 may terminate the connection between the wearable device 401 and the electronic device 201. Connect 1202 may include a user interface indicating whether to connect the wearable device 401 and the electronic device 101. When a user input is received for Connect 1202, the electronic device 201 may connect the wearable device 401 and the electronic device 201. The connection between the wearable device 401 and the electronic device 101 may include a communication connection via short-range communication or in-band communication.

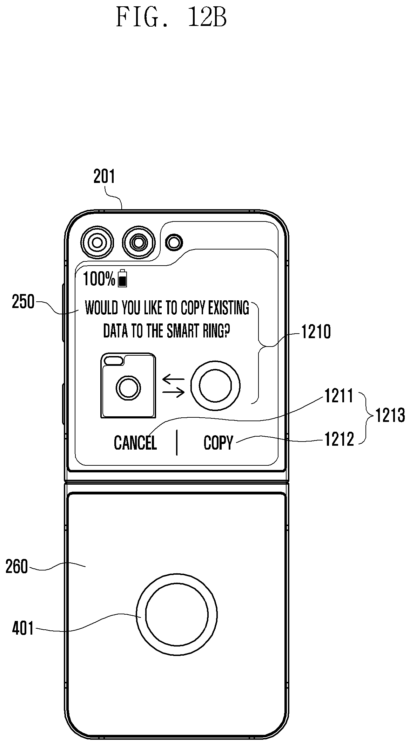

FIG. 12B is a view illustrating the first connection between a wearable device 401 and an electronic device 101 according to an embodiment of the disclosure.

In an embodiment, after a communication connection is established between the wearable device 401 and the electronic device 101, the electronic device 101, under the control of the processor 120, may identify whether data regarding the previously used wearable device is stored in the memory 130.

In an embodiment, when data regarding the previously used wearable device is stored in the memory 130, a user interface 1210 asking whether to transmit the data to the first connected wearable device and a user interface 1213 identifying whether to accept the transmission may be displayed.

In an embodiment, the user interface 1210 asking whether to transmit may include, for example, a phrase such as "Would you like to copy existing data to the smart ring?"

In an embodiment, the user interface 1213 identifying whether to accept the copy may include a user interface requesting a user input such as Cancel 1211 and Copy 1212. When a user input for Cancel 1211 is received, the electronic device 201 may cancel the operation of transmitting the stored data to the wearable device 401. When a user input for Copy 1212 is received, the electronic device 201 may transmit the stored data to the wearable device 401.

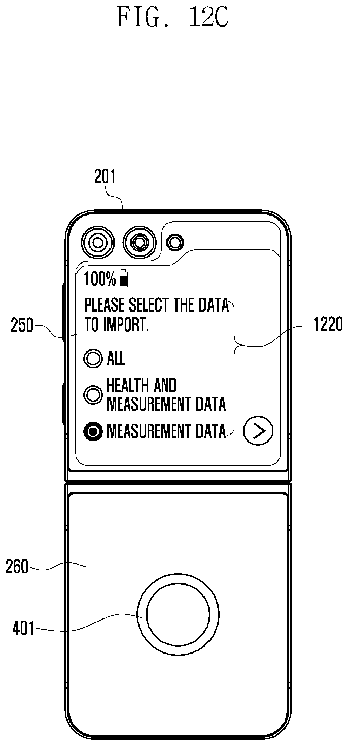

FIG. 12C is a view illustrating the first connection between a wearable device 401 and an electronic device 101 according to an embodiment of the disclosure.

Referring to FIG. 12C, when a user input for Copy 1212 is received, the electronic device 201 may display a user interface 1220 for selecting the type of data to be transmitted to the wearable device 401. The user interface 1220 for selecting the type of data to be transmitted may include items regarding all, health and measurement data, and user settings. All includes all previously stored data, and health and measurement data may include the user's biometric information among the previously stored data.

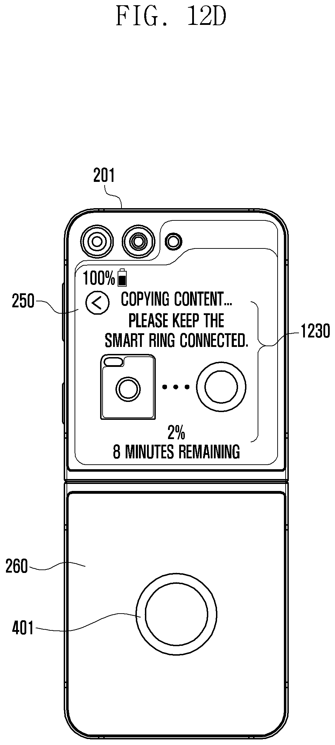

FIG. 12D is a view illustrating the first connection between a wearable device 401 and an electronic device 101 according to an embodiment of the disclosure.

Referring to FIG. 12D, while transmitting the stored data to the wearable device 401, the electronic device 201 may display a user interface 1230 indicating the status of data transmission. The user interface 1230 indicating the status of data transmission may include information such as the amount of data being transmitted, the transmission time, and maintaining the connection (e.g., Copying content, Please keep the Smart ring connected).

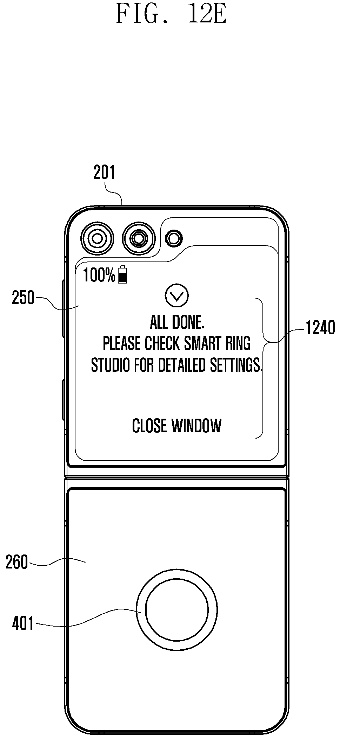

FIG. 12E is a view illustrating the first connection between a wearable device 401 and an electronic device 101 according to an embodiment of the disclosure.

Referring to FIG. 12E, when the transmission of the stored data to the wearable device 401 is completed, the electronic device 201 may display a user interface 1240 indicating that the data transmission is complete. The user interface 1240 indicating that the data transmission is complete may include, for example, phrases such as "All done. Please check Smart ring Studio for detailed settings."

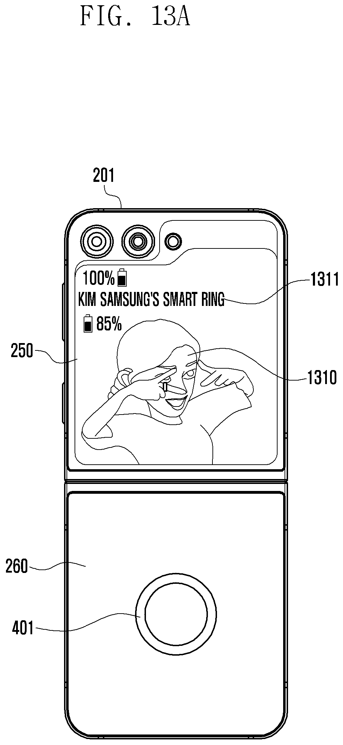

FIG. 13A is a view illustrating the operation in which an electronic device 201 according to an embodiment of the disclosure displays a user interface regarding a wearable device 401 on a cover display 250.

In an embodiment, the electronic device 201 may identify the user of the wearable device 401 on the cover display 250 and display an avatar 1310 of the identified user as a user interface. The electronic device 201 may display information 1311 representing the user (e.g., Kim Samsung's smart ring) along with the user's avatar 1310 on the cover display 250. For example, the user's avatar 1310 may include an image of the user wearing the wearable device 401 (e.g., smart ring). The image of the wearable device 401 (e.g., smart ring) worn on the user's avatar 1310 may include at least one of an image representing a general smart ring, an image of the same shape as the identified smart ring, or an image related to a smart ring preconfigured by the user.

For example, the electronic device 101 may transmit information regarding the user of the wearable device 401 to a server and receive information regarding the avatar of the user of the wearable device 401 from the server. However, the disclosure is not limited thereto, and the electronic device 101 may pre-store information regarding the avatar of the user of the wearable device 401 in the memory 130.

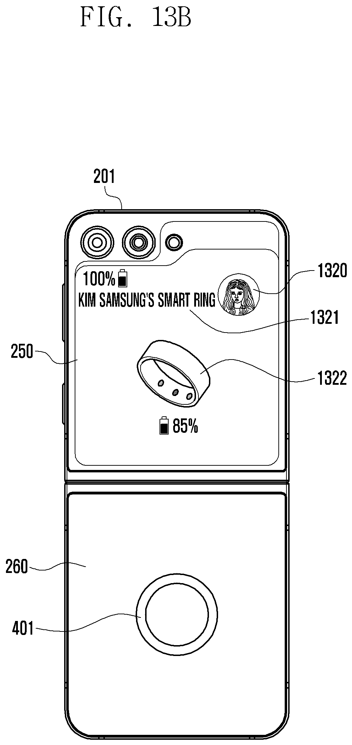

FIG. 13B is a view illustrating the operation in which an electronic device 201 according to an embodiment of the disclosure displays a user interface regarding a wearable device 401 on a cover display 250.

In an embodiment, the electronic device 201 may identify the user of the wearable device 401 on the cover display 250 and display an avatar 1321 of the identified user as a user interface. The electronic device 201 may display information 1321 representing the user (e.g., Kim Samsung's smart ring) and information 1322 regarding the wearable device, along with the user's avatar 1320, on the cover display 250.

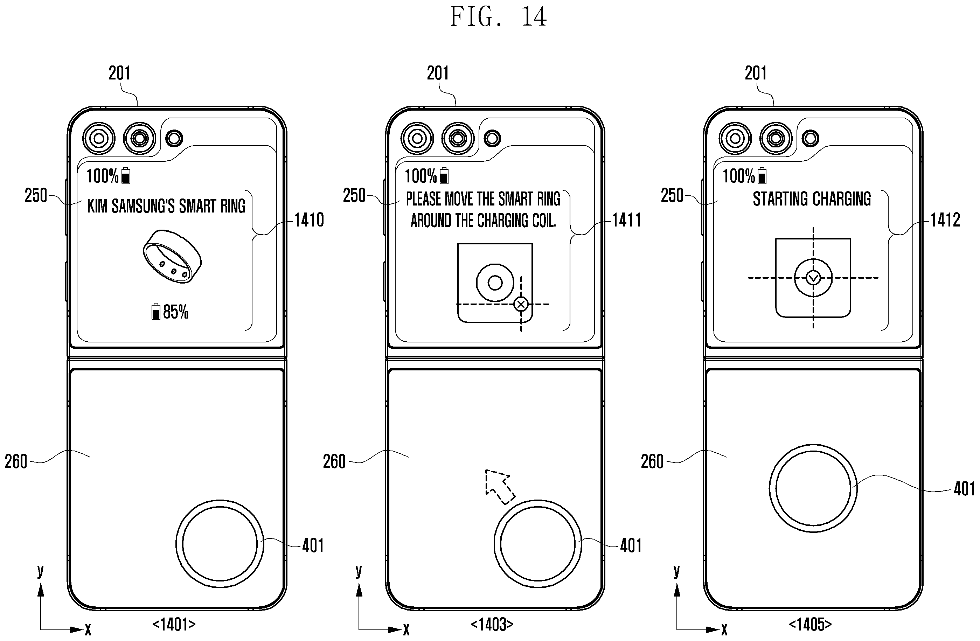

FIG. 14 is a view illustrating the operation in which the electronic device 201 in FIG. 2B according to an embodiment of the disclosure displays a user interface regarding a wearable device 401 on a cover display 250.

In screen 1401, the electronic device 401, under the control of the processor 120, may display a user interface 1410 for the wearable device 401 on the cover display 250. The user interface 1410 for the wearable device 401 may include information indicating the user of the wearable device 401 (e.g., Kim Samsung's Smart ring), information indicating the shape of the wearable device 401, and/or information indicating the battery status of the wearable device 401.

In screen 1403, the electronic device 201, under the control of the processor 120, may identify the position of the wearable device 401 on the charging area. When it is determined that the wearable device 401 is in an area of the charging area where the power reception efficiency is lower than a specified efficiency, the electronic device 201, under the control of the processor 120, may display a guide 1411 to induce the movement of the wearable device 401 as a user interface. The guide 1411 for inducing the movement of the wearable device 401 may be, for example, a phrase such as "Please move the smart ring around the charging coil." and an image indicating the coordinates, which are displayed on the cover display 250.

In screen 1405, the electronic device 201, under the control of the processor 120, may determine whether the wearable device 401 has moved to an area within the charging area where the power reception efficiency is higher than a specified efficiency. If it is determined that the wearable device 401 has moved to an area within the charging area where the power reception efficiency is higher than a specified efficiency, the electronic device 201, under the control of the processor 120, may display a user interface 1412 indicating the start of charging of the wearable device 401 on the cover display 250. The user interface 1412 indicating the start of charging of the wearable device 401 may include a phrase such as "Starting charging."

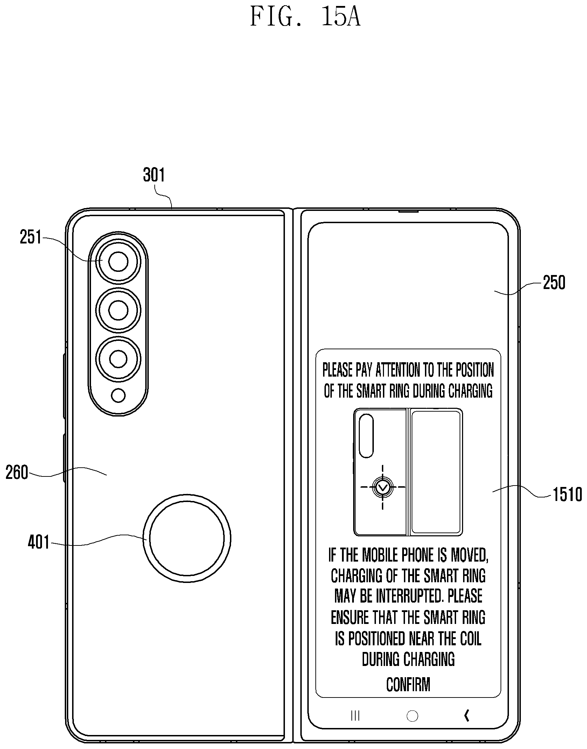

FIG. 15A is a view illustrating the operation in which the electronic device 301 in FIG. 3B according to an embodiment of the disclosure displays a user interface regarding a wearable device 401 on a cover display 250.

In FIG. 15A, the electronic device 301, under the control of the processor 120, may identify the position of the wearable device 401 on a charging area. The electronic device 301 may transmit power to the wearable device 401 under the control of the processor 120. The electronic device 301, under the control of the processor 120, may display a user interface 1510 regarding a positioning guide on the cover display 250. The user interface 1510 regarding the positioning guide may include, for example, a warning message indicating that charging may be stopped when the wearable device 401 moves out of the charging area.

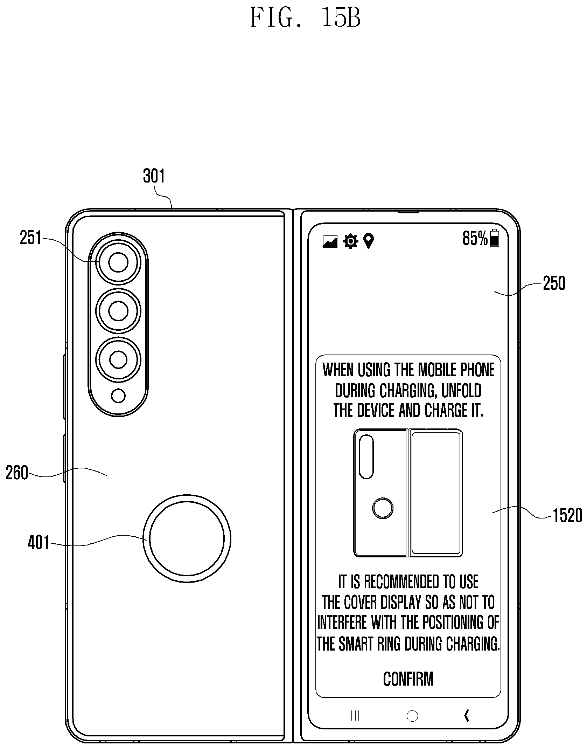

FIG. 15B is a view illustrating the operation in which the electronic device 301 in FIG. 3B according to an embodiment of the disclosure displays a user interface regarding a wearable device 401 on a cover display 250.

In FIG. 15B, the electronic device 301, under the control of the processor 120, may identify the position of the wearable device 401 on a charging area. The electronic device 301 may transmit power to the wearable device 401 under the control of the processor 120. The electronic device 301, under the control of the processor 120, may display a user interface 1520 regarding a recommended usage guide during charging on the cover display 250. The user interface 1520 regarding the recommended usage guide during charging may include, for example, a phrase recommending the use of the cover display 250 or a phrase recommending the use of a cover on which the wearable device 401 may be seated, while the wearable device 401 is charging.

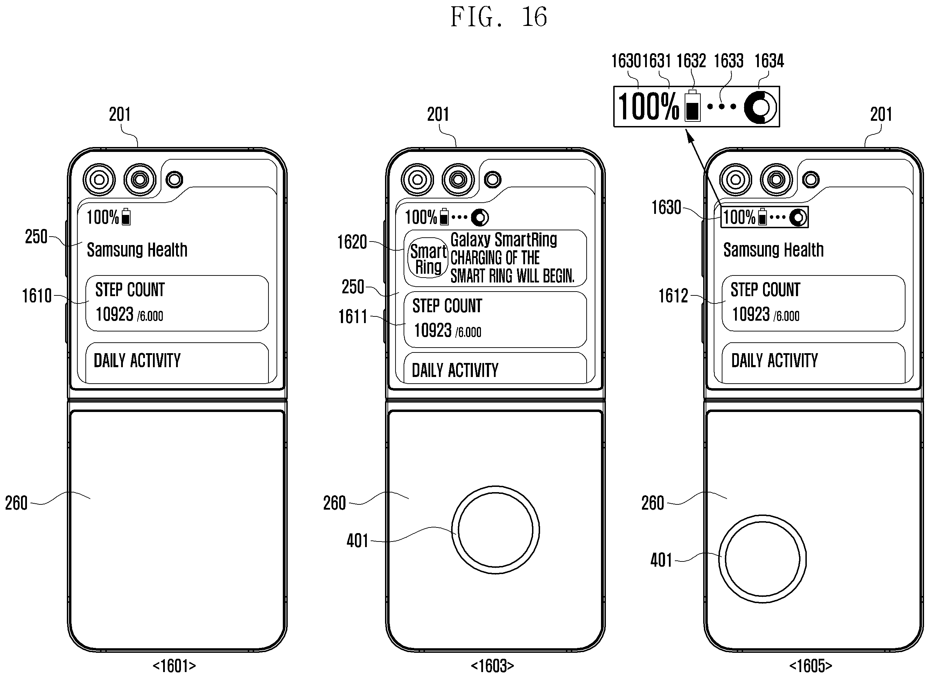

FIG. 16 is a view illustrating the operation in which the electronic device 201 in FIG. 2B according to an embodiment of the disclosure displays a user interface regarding a wearable device 401 on a cover display 250.

The electronic device 201 in FIG. 16 has a foldable housing in an extended state.

In screen 1601, when there is no connection with the wearable device 401, the electronic device 201 may display or perform a task 1610 that is currently running through the cover display 250.

In screen 1603, when the electronic device 201 and the wearable device 401 are connected, the electronic device 101, under the control of the processor 120, may display a user interface 1620 related to the wearable device 401 without obscuring the task area 1611 that is currently running.

In screen 1605, the electronic device 201 may display the connection status between the electronic device 201 and the wearable device 401 as an indicator 1630 on a specific corner of the cover display 250.

In screen 1605, the electronic device 201 may display the connection status between the electronic device 201 and the wearable device 401 as an indicator 1630 at the top of the cover display 250.

In screen 1605, the electronic device 201 may display the connection status between the electronic device 201 and the wearable device 401 as an indicator 1630 on the status bar of the cover display 250.

In screen 1605, the electronic device 201 may display information (e.g., step count, biometric information, or exercise information) received from the wearable device 401 at the bottom of the indicator 1630 on the cover display 250.

The indicator 1630 may include numeric information 1631 regarding the battery of the electronic device 201, image information 1632 regarding the battery of the electronic device 201, connection information 1633 between the electronic device 201 and the wearable device 401, and/or battery information 1634 of the wearable device 401. The indicator 1630 may include numeric information 1631 regarding the battery of the electronic device 201, image information 1632 regarding the battery of the electronic device 201, connection information 1633 between the electronic device 201 and the wearable device 401, and/or battery information 1634 of the wearable device 401 as icons.

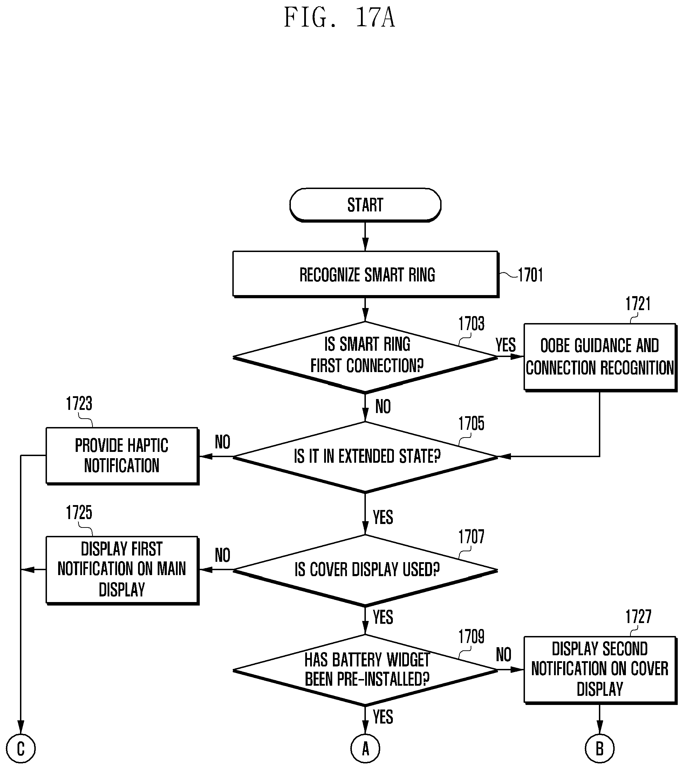

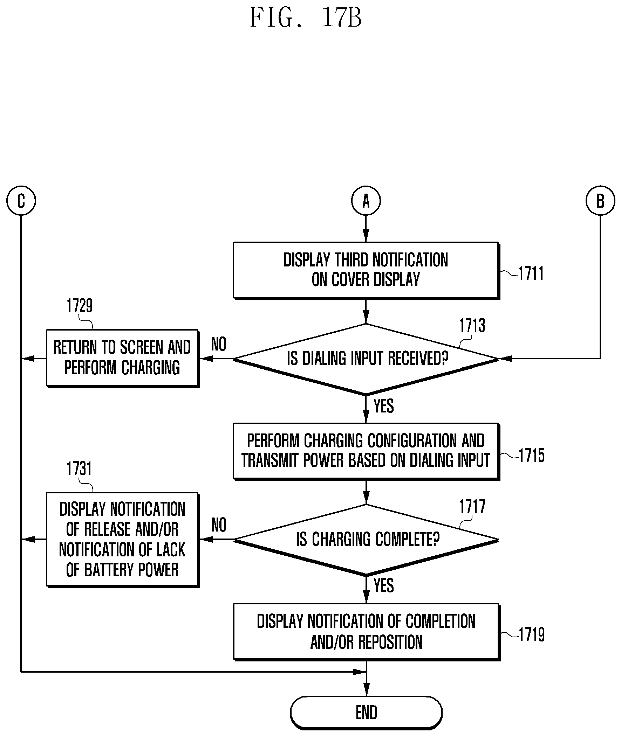

FIGS. 17A and 17B are flowcharts illustrating the connection between an electronic device 101 and a wearable device 401 according to an embodiment of the disclosure.

In an embodiment, the electronic device 101 may include the electronic device 201 in FIG. 2A or the electronic device 301 in FIG. 3A.

In an embodiment, in operation 1701, the electronic device 101 may recognize a smart ring (e.g., the wearable device 401) under the control of the processor 120. The electronic device 101 may establish a communication connection with the smart ring (e.g., the wearable device 401) through a communication circuit or a coil of a charging circuit, and recognize the smart ring (e.g., the wearable device 401).

In an embodiment, in operation 1701, the memory 130 stores instructions, and the instructions, when executed by the processor 120, may cause the electronic device 101 to recognize the smart ring (e.g., the wearable device 401).

In an embodiment, in operation 1703, the electronic device 101, under the control of the processor 120, may determine whether the smart ring (e.g., the wearable device 401) is connected to the electronic device 101 for the first time.

If it is determined that the smart ring (e.g., the wearable device 401) is connected to the electronic device 101 for the first time, the electronic device 101 may proceed from operation 1703 to operation 1721.

If it is determined that the smart ring (e.g., the wearable device 401) has been connected to the electronic device 101 previously, the electronic device 101 may proceed from operation 1703 to operation 1705.

In an embodiment, in operation 1721, the electronic device 101, under the control of the processor 120, may perform guidance and connection recognition regarding the out-of-box experience (OOBE).

In an embodiment, in operation 1721, the memory 130 stores instructions, and the instructions, when executed by the processor 120, may cause the electronic device 101 to perform guidance and connection recognition regarding the out-of-box experience (OOBE).

In an embodiment, in operation 1705, the electronic device 101, under the control of the processor 120, may determine whether the foldable housing of the electronic device 101 is in an extended state.

In an embodiment, in operation 1705, the memory 130 stores instructions, and the instructions, when executed by the processor 120, may cause the electronic device 101 to determine whether the foldable housing of the electronic device 101 is in an extended state.

When the foldable housing of the electronic device 101 is in the extended state, the electronic device 201 may proceed from operation 1705 to operation 1707.

When the foldable housing of the electronic device 101 is not in the extended state, the electronic device 201 may proceed from operation 1705 to operation 1723.

In an embodiment, in operation 1723, the electronic device 101 may provide a haptic notification under the control of the processor 120. The electronic device 101 may notify the user that the smart ring (e.g., the wearable device 401) is rechargeable via the haptic notification.

In an embodiment, in operation 1723, the memory 130 stores instructions, and the instructions, when executed by the processor 120, may cause the electronic device 101 to provide a haptic notification.

In an embodiment, in operation 1707, the electronic device 101 may determine whether the cover display 250 is in use under the control of the processor 120.

In an embodiment, in operation 1707, the electronic device 101, under the control of the processor 120, may determine whether the cover display 250 is in an active state.

In an embodiment, in operation 1707, the memory 130 stores instructions, and the instructions, when executed by the processor 120, may cause the electronic device 101 to determine whether the cover display 250 is in use.

In an embodiment, in operation 1707, the memory 130 stores instructions, and the instructions, when executed by the processor 120, may cause the electronic device 101 to determine whether the cover display 250 is in an active state.

If the cover display 250 is in use, the electronic device 201 may proceed from operation 1707 to operation 1709.

If the cover display 250 is not in use, the electronic device 201 may proceed from operation 1707 to operation 1725.

In an embodiment, in operation 1725, the electronic device 101 may display a first notification on the main display 230 under the control of the processor 120.

In an embodiment, in operation 1725, the memory 130 stores instructions, and the instructions, when executed by the processor 120, may cause the electronic device 101 to display a first notification on the main display 230.

In an embodiment, the first notification may include information indicating that the smart ring (e.g., the wearable device 401) has been recognized and information indicating that control is possible via the cover display 250.

In an embodiment, in operation 1709, the electronic device 101, under the control of the processor 120, may identify whether a battery widget of the smart ring (e.g., the wearable device 401) or a battery application of the smart ring (e.g., the wearable device 401) has been pre-installed.

In an embodiment, in operation 1709, the memory 130 stores instructions, and the instructions, when executed by the processor 120, may cause the electronic device 101 to identify whether a battery widget of the smart ring (e.g., the wearable device 401) or a battery application of the smart ring (e.g., the wearable device 401) has been pre-installed.

When a battery widget of the smart ring (e.g., the wearable device 401) or a battery application of the smart ring (e.g., the wearable device 401) has been pre-installed, the electronic device 201 may proceed from operation 1709 to operation 1711.

When a battery widget of the smart ring (e.g., the wearable device 401) or a battery application of the smart ring (e.g., the wearable device 401) has not been installed, the electronic device 201 may proceed from operation 1709 to operation 1727.

In an embodiment, in operation 1727, the electronic device 101 may display a second notification on the cover display 250 under the control of the processor 120.

In an embodiment, in operation 1727, the memory 130 stores instructions, and the instructions, when executed by the processor 120, may cause the electronic device 101 to display a second notification on the cover display 250.

In an embodiment, the second notification may include information indicating that the smart ring (e.g., the wearable device 401) has been recognized.

In an embodiment, in operation 1711, the electronic device 101 may display a third notification on the cover display 250 under the control of the processor 120.

In an embodiment, in operation 1711, the memory 130 stores instructions, and the instructions, when executed by the processor 120, may cause the electronic device 101 to display a third notification on the cover display 250.

In an embodiment, the third notification may include information indicating that the smart ring (e.g., the wearable device 401) has been recognized and/or information about the time required to charge the smart ring (e.g., the wearable device 401) and information about the amount of power consumed.

In an embodiment, in operation 1713, the electronic device 101, under the control of the processor 120, may determine whether there is a dialing input to a specific area of the smart ring (e.g., the wearable device 401).

In an embodiment, in operation 1714, the memory 130 stores instructions, and the instructions, when executed by the processor 120, may cause the electronic device 101 to determine whether there is a dialing input to a specific area of the smart ring (e.g., the wearable device 401).

If there is a dialing input to a specific area of the smart ring (e.g., the wearable device 401), the electronic device 101 may proceed from operation 1713 to operation 1715.

If there is no dialing input to a specific area of the smart ring (e.g., the wearable device 401), the electronic device 101 may proceed from operation 1713 to operation 1729.

In an embodiment, in operation 1729, the electronic device 101, under the control of the processor 120, may return to the screen currently running and perform a charging operation for the smart ring (e.g., the wearable device 401).

In an embodiment, in operation 1729, the memory 130 stores instructions, and the instructions, when executed by the processor 120, may cause the electronic device 101 to return to the screen currently running and perform a charging operation for the smart ring (e.g., the wearable device 401).

In an embodiment, in operation 1715, the electronic device 101, under the control of the processor 120, may perform charging configuration for the smart ring (e.g., the wearable device 401) and transmit power to the smart ring (e.g., the wearable device 401) based on the dialing input.

In an embodiment, in operation 1715, the memory 130 stores instructions, and the instructions, when executed by the processor 120, may cause the electronic device 101 to perform charging configuration for the smart ring (e.g., the wearable device 401) based on the dialing input and transmit power to the smart ring (e.g., the wearable device 401).

In an embodiment, when an electronic device 101 receives a dialing input of rotating the lateral side of the wearable device 401 under the control of the processor 120, the electronic device 101, under the control of the processor 120, may configure the amount of power of a battery (e.g., the battery 189 in FIG. 1) included in the smart ring (e.g., the wearable device 401) according to the amount of movement of the gesture. Based on the configured amount of power of the smart ring (e.g., the wearable device 401), the electronic device 101, under the control of the processor 120, may wirelessly transmit power to the smart ring (e.g., the wearable device 401) through the charging circuit. The charging configuration may include an operation of configuring the amount of power of the battery (e.g., the battery 189 in FIG. 1) included in the smart ring (e.g., the wearable device 401).

In an embodiment, when a user interface related to a jog dial is displayed on the cover display 250 and a gesture of turning the jog dial is received, the electronic device 101, under the control of the processor 120, may configure the amount of power of the battery (e.g., the battery 189 in FIG. 1) included in the smart ring (e.g., the wearable device 401) according to the amount of movement of the gesture.

In an embodiment, in operation 1717, the electronic device 101, under the control of the processor 120, may identify whether the charging of the smart ring (e.g., the wearable device 401) is complete based on the charging configuration.

In an embodiment, in operation 1717, the memory 130 stores instructions, and the instructions, when executed by the processor 120, may cause the electronic device 101 to identify whether the charging of the smart ring (e.g., the wearable device 401) is complete based on the charging configuration.

When the charging of the smart ring (e.g., the wearable device 401) is completed based on the charging configuration, the electronic device 201 may proceed from operation 1717 to operation 1719.

When the charging of the smart ring (e.g., the wearable device 401) is not completed based on the charging configuration, the electronic device 201 may proceed from operation 1717 to operation 1731.

In an embodiment, in operation 1719, the electronic device 101, under the control of the processor 120, may display a notification regarding the completion of charging for the smart ring (e.g., the wearable device 401) and/or the reposition of the smart ring (e.g., the wearable device 401) for additional charging.

In an embodiment, in operation 1719, the memory 130 stores instructions, and the instructions, when executed by the processor 120, may cause the electronic device 101 to display a notification regarding the completion of charging for the smart ring (e.g., the wearable device 401) and/or the reposition of the smart ring (e.g., the wearable device 401) for additional charging.

In an embodiment, in operation 1731, the electronic device 101, under the control of the processor 120, may display a notification regarding the release of charging and/or a notification regarding a lack of power included in the battery of the electronic device 101.

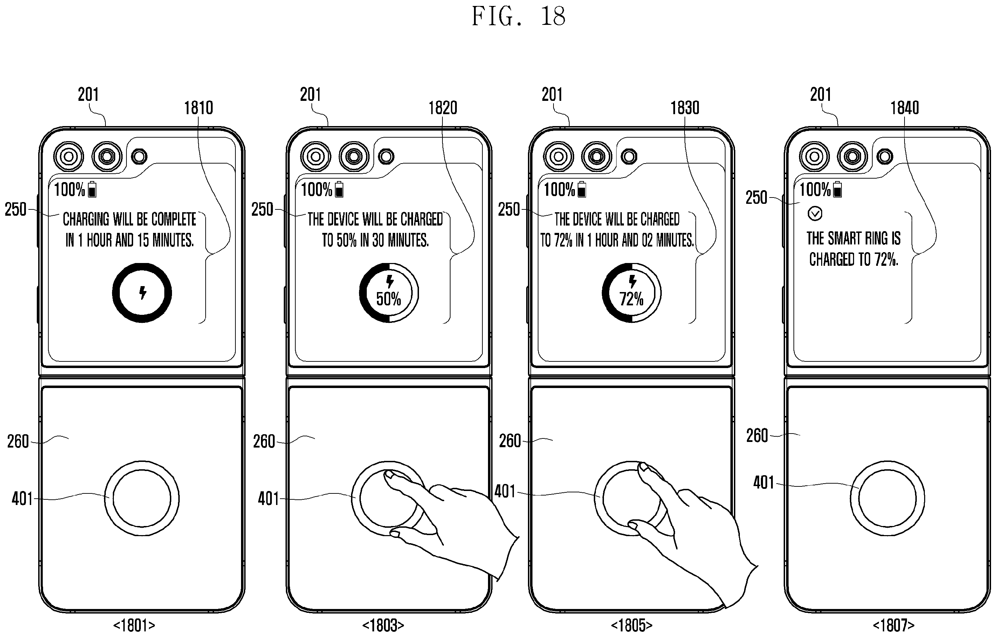

FIG. 18 is a view illustrating the operation of performing charging configuration for a smart ring (e.g., the wearable device 401) in an electronic device 201 according to an embodiment of the disclosure.

In screen 1801, when there is no dialing input, the electronic device 201, under the control of the processor 120, may perform charging configuration for the full charging of the smart ring (e.g., the wearable device 401). For example, the electronic device 201 may display the time consumed until the charging of the smart ring (e.g., the wearable device 401) is complete on the cover display 250 via a user interface 1810 (e.g., Charging will be complete in 1 hour and 15 minutes).

In screens 1803 and 1805, the electronic device 101, under the control of the processor 120, may perform charging configuration of the smart ring (e.g., the wearable device 401) based on the dialing input and transmit power to the smart ring (e.g., the wearable device 401).

In screens 1803 and 1805, when the electronic device 101 receives a dialing input of rotating the lateral surface of the smart ring (e.g., the wearable device 401), the electronic device 101, under the control of the processor 120, may configure the amount of power of the battery (e.g., the battery 189 in FIG. 1) included in the smart ring (e.g., the wearable device 401) according to the amount of movement of the gesture. Based on the configured amount of power of the smart ring (e.g., the wearable device 401), the electronic device 101 may wirelessly transmit power to the smart ring (e.g., the wearable device 401) through the charging circuit under the control of the processor 120. The charging configuration may include an operation of configuring the amount of power of the battery (e.g., the battery 189 in FIG. 1) included in the smart ring (e.g., the wearable device 401).

For example, when an input of rotating the lateral side of the smart ring (e.g., the wearable device 401) approximately halfway is received, the electronic device 101 may display a phrase such as "The device will be charged to 50% in 30 minutes" on a first user interface 1820.

For example, when an input of rotating the lateral side of the smart ring (e.g., the wearable device 401) approximately two-thirds is received, the electronic device 101 may display a phrase such as "The device will be charged to 72% in 30 minutes" on a second user interface 1830.

In screen 1807, the electronic device 101, under the control of the processor 120, may display a user interface 1840 indicating that charging is complete when the charging of the smart ring (e.g., the wearable device 401) is completed based on the charging configuration.

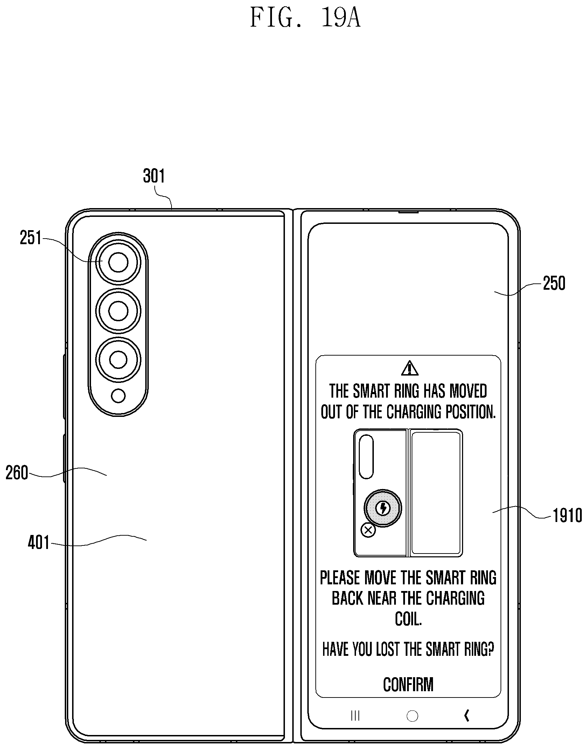

FIG. 19A is a view illustrating the case where a smart ring (e.g., the wearable device 401) leaves while receiving power in an electronic device 301 according to an embodiment of the disclosure.

In an embodiment, when the smart ring (e.g., the wearable device 401) leaves from the electronic device 301 while receiving power, a user interface 1910 for inducing repositioning of the smart ring (e.g., the wearable device 401) in the charging area of the cover 260 may be included. The user interface 1910 for inducing the repositioning in the charging area may include a phrase such as "The smart ring has moved out of the charging position. Please move the smart ring back around the charging coil. Have you lost the smart ring? Confirm."

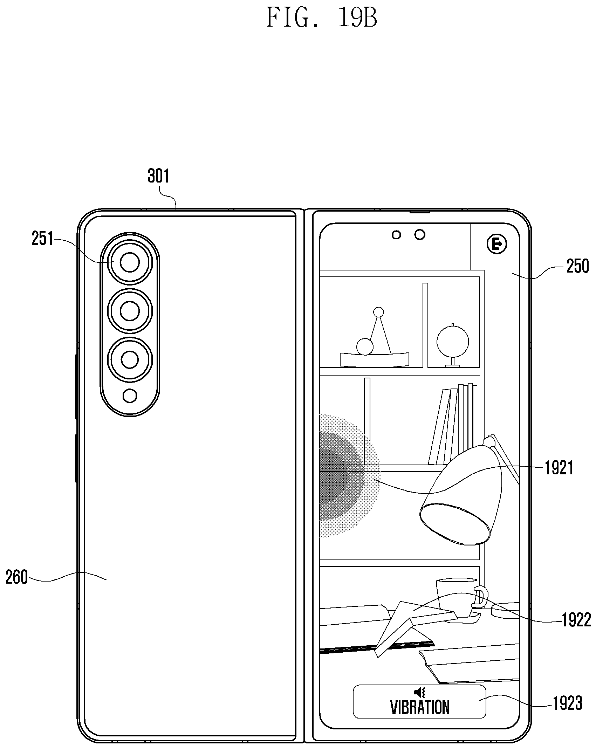

FIG. 19B is a view illustrating the case where a smart ring (e.g., the wearable device 401) leaves while receiving power in an electronic device 301 according to an embodiment of the disclosure.

In an embodiment, when the smart ring (e.g., the wearable device 401) leaves from the electronic device 301 while receiving power, a user interface for tracking the position of the smart ring (e.g., the wearable device 401) may be displayed. For example, when a user input is received for "Confirm" in the phrase " Have you lost the smart ring? Confirm" in a user interface 1910 for inducing the repositioning in the charging area, a user interface for tracking the position of the smart ring (e.g., the wearable device 401) may be displayed. The electronic device 301 may identify the position of the smart ring (e.g., the wearable device 401) based on the communication circuit. The user interface for tracking the position of the smart ring (e.g., the wearable device 401) may include a user interface 1921 for the position of the smart ring (e.g., the wearable device 401) and a user interface 1922 for the orientation of the smart ring (e.g., the wearable device 401). The user interface for tracking the position of the smart ring (e.g., the wearable device 401) may include a user interface 1923 for indicating the distance between the smart ring (e.g., the wearable device 401) and the electronic device 301 by vibration (or haptic). Upon receiving a user input for the user interface 1923 for indicating by vibration (or haptic), the electronic device 301 may output an adjusted intensity of vibration (or haptic) in proportion to the distance between the smart ring (e.g., the wearable device 401) and the electronic device 301.

In an embodiment, an electronic device (e.g., the electronic device 201 or the electronic device 301) may include a foldable housing configured to be folded or unfolded, a main display 230 disposed on a first surface of the foldable housing, a cover display 250 disposed on a second surface of the foldable housing, a coil disposed to face the second surface and configured to receive power wirelessly from the outside or transmit power to the outside, a communication circuit, a processor (e.g., the processor 120), and a memory (e.g., the memory 130) that stores instructions, wherein the instructions, when executed by the processor (e.g., the processor 120), may cause the electronic device (e.g., the electronic device 201 or the electronic device 301) to determine whether a wearable device 401 is placed in a charging area corresponding to the coil, identify one or more of a user of the wearable device 401 or a device name thereof through the communication circuit, perform control to display, based on determining that the wearable device 401 is placed in the charging area and determining that the cover display 250 faces a specific direction, using the cover display 250, a user interface related to the wearable device 401 on the cover display 250, transmit power to the wearable device 401 based on charging configuration, and display a user interface regarding charging of the wearable device 401.

In an embodiment, the instructions, when executed by the processor (e.g., the processor 120), may cause the electronic device (e.g., the electronic device 201 or the electronic device 301) to display an application related to the wearable device 401 on the cover display 250, based on a user input on the cover display 250, and display a user interface corresponding to a shape of the wearable device 401 in an area of the cover display 250 corresponding to the user input.

In an embodiment, the instructions, when executed by the processor (e.g., the processor 120), may cause the electronic device (e.g., the electronic device 201 or the electronic device 301) to display, in an area of the cover display 250, a user interface corresponding to a shape of the wearable device 401 in a fade-in animation, based on identification of the user of the wearable device 401 and the device.

In an embodiment, the instructions, when executed by the processor (e.g., the processor 120), may cause the electronic device (e.g., the electronic device 201 or the electronic device 301) to display a user interface corresponding to a shape of the wearable device 401 by sequentially moving it to the central area of the cover display 250 in a fade-in animation, and display a user interface regarding recognition of the wearable device 401 on the cover display 250.

In an embodiment, the instructions, when executed by the processor (e.g., the processor 120), may cause the electronic device (e.g., the electronic device 201 or the electronic device 301) to switch an up and down direction of content being displayed on the cover display 250 and display the switched content when a user input for screen rotation is received while displaying the user interface related to the wearable device 401.

In an embodiment, the instructions, when executed by the processor (e.g., the processor 120), may cause the electronic device (e.g., the electronic device 201 or the electronic device 301) to display a user interface regarding new device registration, based on determining that connection between the wearable device 401 and the electronic device (e.g., the electronic device 201 or the electronic device 301) is a first connection

In an embodiment, the instructions, when executed by the processor (e.g., the processor 120), may cause the electronic device (e.g., the electronic device 201 or the electronic device 301) to display, based on identification of one or more of the user or the device name of the wearable device 401, an avatar corresponding to the user and the device name.

In an embodiment, the instructions, when executed by the processor (e.g., the processor 120), may cause the electronic device (e.g., the electronic device 201 or the electronic device 301) to display, on the cover display 250, a user interface for guiding the wearable device 401 to a position where power reception is good when the wearable device 401 is placed in the charging area,

In an embodiment, the instructions, when executed by the processor (e.g., the processor 120), may cause the electronic device (e.g., the electronic device 201 or the electronic device 301) to display a user interface regarding recognition, connection status, and battery status of the wearable device 401 when a task is being displayed on the cover display 250.

In an embodiment, the instructions, when executed by the processor (e.g., the processor 120), may cause the electronic device (e.g., the electronic device 201 or the electronic device 301) to display a user interface for configuring the charging of the wearable device 401, based on a user input received through the wearable device 401.

In an embodiment, a user interface providing method may include determining whether a wearable device 401 is placed in a charging area corresponding to a coil, identifying one or more of a user of the wearable device 401 or a device name thereof through a communication circuit, performing control to display, based on determining that the wearable device 401 is placed in the charging area and determining that the cover display 250 faces a specific direction, using the cover display 250, a user interface related to the wearable device 401 on the cover display 250; and transmitting power to the wearable device 401 based on charging configuration and displaying a user interface regarding charging of the wearable device 401.

In an embodiment, a user interface providing method may include displaying an application related to the wearable device 401 on the cover display 250, based on a user input on the cover display 250, and displaying a user interface corresponding to a shape of the wearable device 401 in an area of the cover display 250 corresponding to the user input.

In an embodiment, a user interface providing method may include displaying, in an area of the cover display 250, a user interface corresponding to a shape of the wearable device 401 in a fade-in animation, based on identification of the user of the wearable device 401 and the device.

In an embodiment, a user interface providing method may include displaying a user interface corresponding to a shape of the wearable device 401 by sequentially moving it to the central area of the cover display 250 in a fade-in animation, and displaying a user interface regarding recognition of the wearable device 401 on the cover display 250.

In an embodiment, a user interface providing method may include switching an up and down direction of content being displayed on the cover display 250 and display the switched content when a user input for screen rotation is received while displaying the user interface related to the wearable device 401.

In an embodiment, a user interface providing method may include displaying a user interface regarding new device registration, based on determining that connection between the wearable device 401 and the electronic device (e.g., the electronic device 201 or the electronic device 301) is a first connection.

In an embodiment, a user interface providing method may include, based on identification of one or more of the user or the device name of the wearable device 401, displaying an avatar corresponding to the user and the device name.

In an embodiment, a user interface providing method may include displaying, on the cover display 250, a user interface for guiding the wearable device 401 to a position where power reception is good when the wearable device 401 is placed in the charging area.

In an embodiment, a user interface providing method may include displaying a user interface regarding recognition, connection status, and battery status of the wearable device 401 when a task is being displayed on the cover display 250.

In an embodiment, a user interface providing method may include displaying a user interface for configuring the charging of the wearable device 401, based on a user input received through the wearable device 401.

An electronic device according to various embodiments disclosed herein may be any of various types of devices. The electronic devices may include, for example, a portable communication device (e.g., a smartphone), a computer device, a portable multimedia device, a portable medical device, a camera, a wearable device, or a home appliance. The electronic device according to the embodiments disclosed herein is not limited to the above-described devices.

It is to be understood that various embodiments of the disclosure and terms for describing the embodiments are not intended to limit the technical features disclosed herein to specific embodiments, and that the embodiments include various modifications, equivalents, or substitutions of the corresponding embodiments. In relation to the description of the drawings, similar reference numerals may be used for similar or related components. The singular form of a noun corresponding to an item may include one item or a plurality of items unless the context clearly indicates otherwise. In the disclosure, each of phrases, such as "A or B," "at least one of A and B," "at least one of A or B," "A, B, or C," "at least one of A, B, and C," and "at least one of A, B, or C" may include any one of the items listed together in the corresponding phrase or all possible combinations of the items. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

The term "module" used in various embodiments of the disclosure may include a unit implemented in hardware, software, or firmware, and may be used interchangeably with terms such as "logic," "logic block," "component," "circuit," or the like. The module may be an integrally configured component or a minimum unit or a portion of the component, which performs one or more functions. For example, according to an embodiment, the module may be implemented in the form of an application-specific integrated circuit (ASIC).

Various embodiments disclosed herein may be implemented by software (e.g., the program 140) including one or more instructions stored in a storage medium (e.g., internal memory 136 or external memory 138) readable by a machine (e.g., an electronic device 101). For example, a processor (e.g., the processor 120) of a device (e.g., the electronic device 101) may invoke and execute at least one of the stored one or more instructions from the storage medium. This enables the device to be operated to perform at least one function in response to the at least one invoked instruction. The one or more instructions may include codes generated by a compiler or code capable of being executed by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish a case where data is permanently stored on the storage medium and a case where data is temporarily stored.

According to an embodiment, a method according to various embodiments set forth herein may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each of the above-described components (e.g., module or program) may include either a single entity or multiple entities, and some of the multiple entities may be placed separately from other components. According to various embodiments, one or more of the components or operations described above may be omitted, or one or more other components or operations may be added. Alternatively, or additionally, multiple components (e.g., modules or programs) may be integrated into a single component. In such a case, the integrated element may perform one or more functions of each of the plurality of elements in the same or similar manner as they are performed by a corresponding one of the plurality of elements before the integration. According to various embodiments, operations performed by a module, a program, or other components may be executed sequentially, in parallel, repetitively, or heuristically, one or more of the operations may be executed in a different order or omitted, or one or more other operations may be added.

## Claims

1. An electronic device comprising:
a foldable housing configured to be folded or unfolded;
a main display disposed on a first surface of the foldable housing;
a cover display disposed on a second surface of the foldable housing;
a coil disposed to face the second surface and configured to receive power wirelessly from the outside or transmit power to the outside;
a communication circuit;
at least one processor; and
a memory configured to store instructions,
wherein the instructions are configured to cause, when executed individually or collectively by the at least one processor, the electronic device to:
determine whether a wearable device is placed in a charging area corresponding to the coil;
identify one or more of a user of the wearable device or a device name thereof through the communication circuit;
perform control to display, based on determining that the wearable device is placed in the charging area and determining that the cover display faces a specific direction, using the cover display, a user interface related to the wearable device on the cover display; and
transmit power to the wearable device based on charging configuration and display a user interface regarding charging of the wearable device.

2. The electronic device of claim 1,
wherein the instructions are configured to cause, when executed individually or collectively by the at least one processor, the electronic device to
display an application related to the wearable device on the cover display, based on a user input on the cover display, and
display a user interface corresponding to a shape of the wearable device in an area of the cover display corresponding to the user input.

3. The electronic device of claim 1,
wherein the instructions are configured to cause, when executed individually or collectively by the at least one processor, the electronic device to
display, in an area of the cover display, a user interface corresponding to a shape of the wearable device in a fade-in animation, based on identification of the user of the wearable device and the device.

4. The electronic device of claim 1,
wherein the instructions are configured to cause, when executed individually or collectively by the at least one processor, the electronic device to:
display a user interface corresponding to a shape of the wearable device by sequentially moving it to the central area of the cover display in a fade-in animation; and
display a user interface regarding recognition of the wearable device on the cover display.

5. The electronic device of claim 1,
wherein the instructions are configured to cause, when executed individually or collectively by the at least one processor, the electronic device to
switch an up and down direction of content being displayed on the cover display and display the switched content when a user input for screen rotation is received while displaying the user interface related to the wearable device.

6. The electronic device of claim 1,
wherein the instructions are configured to cause, when executed individually or collectively by the at least one processor, the electronic device to:
display a user interface regarding new device registration, based on determining that connection between the wearable device and the electronic device is a first connection; and
based on identification of one or more of the user or the device name of the wearable device, display an avatar corresponding to the user and the device name.

7. The electronic device of claim 1,
wherein the instructions are configured to cause, when executed individually or collectively by the at least one processor, the electronic device to:
display, on the cover display, a user interface for guiding the wearable device to a position where power reception is good when the wearable device is placed in the charging area;
display a user interface regarding recognition, connection status, and battery status of the wearable device when a task is being displayed on the cover display; and
display a user interface for configuring the charging of the wearable device, based on a user input received through the wearable device.

8. A method for providing a user interface, the method comprising:
determining whether a wearable device is placed in a charging area corresponding to a coil;
identifying one or more of a user of the wearable device or a device name thereof through a communication circuit;
performing control to display, based on determining that the wearable device is placed in the charging area and determining that the cover display faces a specific direction, using the cover display, a user interface related to the wearable device on the cover display; and
transmitting power to the wearable device based on charging configuration and displaying a user interface regarding charging of the wearable device.

9. The method of claim 8, comprising:
displaying an application related to the wearable device on the cover display, based on a user input on the cover display; and
displaying a user interface corresponding to a shape of the wearable device in an area of the cover display corresponding to the user input.

10. The method of claim 8, comprising
displaying, in an area of the cover display, a user interface corresponding to a shape of the wearable device in a fade-in animation, based on identification of the user of the wearable device and the device.

11. The method of claim 8, comprising:
displaying a user interface corresponding to a shape of the wearable device by sequentially moving it to the central area of the cover display in a fade-in animation; and
displaying a user interface regarding recognition of the wearable device on the cover display.

12. The method of claim 8, comprising
switching an up and down direction of content being displayed on the cover display and display the switched content when a user input for screen rotation is received while displaying the user interface related to the wearable device.

13. The method of claim 8, comprising:
displaying a user interface regarding new device registration, based on determining that connection between the wearable device and the electronic device is a first connection; and
based on identification of one or more of the user or the device name of the wearable device, displaying an avatar corresponding to the user and the device name.

14. The method of claim 8, comprising
displaying, on the cover display, a user interface for guiding the wearable device to a position where power reception is good when the wearable device is placed in the charging area.

15. The method of claim 8, comprising:
displaying a user interface regarding recognition, connection status, and battery status of the wearable device when a task is being displayed on the cover display; and
displaying a user interface for configuring the charging of the wearable device, based on a user input received through the wearable device.
